# EUROPEAN PATENT APPLICATION

(11) **EP 3 860 273 A1**
(43) Date of publication of application: **04.08.2021**
(21) Application number: 19871819.9
(22) Date of filing: 11.10.2019
(51) Int. Cl.: H04W 72/04

(54) **INFORMATION PROCESSING METHOD AND APPARATUS**

(30) Priority: 12.10.2018 CN 201811191322
(71) Applicant: Huawei Technologies Co., Ltd., Longgang District Shenzhen, Guangdong 518129 (CN)
(72) Inventor: XU, Xiaoying, Shenzhen, Guangdong 518129 (CN); HUANG, Qufang, Shenzhen, Guangdong 518129 (CN); LIU, Xing, Shenzhen, Guangdong 518129 (CN); ZENG, Qinghai, Shenzhen, Guangdong 518129 (CN)
(74) Representative: MERH-IP Matias Erny Reichl Hoffmann Patentanwälte PartG mbB
(86) International application number: PCT/CN2019/110581
(87) International publication number: WO 2020/073986

(57) **Abstract**

This application provides an information processing method and apparatus. The method includes: A terminal side device sends uplink information through a PUSCH; determines a monitoring identifier of a downlink control channel based on PUSCH resource information of a resource occupied by the PUSCH; further monitors the downlink control channel based on the monitoring identifier, where the downlink control channel carries information used to indicate a resource location of a PDSCH; and then receives the PDSCH at the resource location of the PDSCH, where the PDSCH carries a response message. In this way, the terminal side device avoids blindly monitoring, based on the monitoring identifier, a downlink control channel that does not belong to the terminal side device and parsing a corresponding response message, and power consumption of the terminal side device is reduced.

## Description

This application claims priority to Chinese Patent Application No. 201811191322.3, filed with the Chinese Patent Office on October 12, 2018 and entitled "INFORMATION PROCESSING METHOD AND APPARATUS", which is incorporated herein by reference in its entirety.

### TECHNICAL FIELD

Embodiments of this application relate to the field of wireless communications, and more specifically, to an information processing method and apparatus.

### BACKGROUND

In a conventional communications system, a terminal side device in an idle state and a terminal side device in an inactive state may perform uplink information transmission on a data transmission resource preconfigured by a network side device; then may monitor a physical downlink control channel (physical downlink control channel, PDCCH) based on a paging radio network temporary identifier (paging radio network temporary identity, P-RNTI), where the PDCCH carries indication information used to indicate a resource location of a physical downlink shared channel (physical downlink shared channel, PDSCH); and receives the PDSCH based on the resource location, of the PDSCH, indicated by the indication information, where the PDSCH carries a response message, and the response message may include feedback information used to indicate whether the network side device successfully receives uplink information, indication information used to indicate whether the terminal side device remains in a current state, a paging message, and the like. For example, the indication information may be used to indicate that the terminal side device can remain in the current inactive state.

In other words, the terminal side device needs to parse all response messages to determine whether there is an identifier of the terminal side device. That is, the terminal side device needs to decode all the response messages regardless of whether there is paging for the terminal side device. Consequently, power consumption of the terminal side device may be relatively high.

### SUMMARY

Embodiments of this application provide an information processing method and apparatus, which can help reduce power consumption of a terminal side device.

According to a first aspect, an information processing method is provided. The method includes: A terminal side device sends uplink information through a physical uplink shared channel PUSCH; the terminal side device determines a monitoring identifier of a downlink control channel based on physical uplink shared channel PUSCH resource information, where the PUSCH resource information is used to indicate a resource occupied by the PUSCH; and the terminal side device receives the downlink control channel based on the monitoring identifier, where the downlink control channel carries information used to indicate a resource location of a downlink shared channel PDSCH, and the PDSCH is used to carry a response message of the uplink information.

The terminal side device sends the uplink information through the PUSCH; determines the monitoring identifier of the downlink control channel based on the PUSCH resource information of the resource occupied by the PUSCH; further monitors the downlink control channel based on the monitoring identifier, where the downlink control channel carries the information used to indicate the resource location of the PDSCH; and then receives the PDSCH at the resource location of the PDSCH, where the PDSCH carries the response message. In this way, the terminal side device avoids blindly monitoring, based on the monitoring identifier, a downlink control channel that does not belong to the terminal side device and parsing a corresponding response message, and power consumption of the terminal side device is reduced.

In some possible implementations, before the terminal side device sends the uplink information, the method further includes: The terminal side device sends a preamble through a random access channel RACH, where that the terminal side device determines a monitoring identifier of a downlink control channel based on physical uplink shared channel PUSCH resource information includes: The terminal side device determines the monitoring identifier based on the PUSCH resource information and random access channel RACH resource information, where the RACH resource information is used to indicate a resource occupied by the RACH.

The preamble may be carried in the RACH, and a resource occupied by the terminal side device for sending the preamble is a resource occupied by the RACH that carries the preamble. The terminal side device may determine the monitoring identifier with reference to the PUSCH resource information and the RACH resource information. For example, for a combination of a piece of PUSCH resource information and a piece of RACH resource information, a monitoring identifier is obtained through derivation by using a rule or a function relationship. In this way, the terminal device side can determine a more accurate monitoring identifier, to avoid monitoring the downlink control channel that does not belong to the terminal side device and parsing the corresponding response message, and the power consumption of the terminal side device is further reduced.

In some possible implementations, before the terminal side device sends the uplink information, the method further includes: The terminal side device sends a reference signal, where that the terminal side device determines a monitoring identifier of a downlink control channel based on physical uplink shared channel PUSCH resource information includes: The terminal side device determines the monitoring identifier based on the PUSCH resource information and reference signal resource information, where the reference signal resource information is used to indicate a resource occupied by the reference signal.

The terminal side device may determine the monitoring identifier with reference to the PUSCH resource information and the reference signal resource information. For example, for a combination of a piece of PUSCH resource information and a piece of reference signal resource information, a monitoring identifier is obtained through derivation by using a rule or a function relationship. In this way, the terminal device side can determine a more accurate monitoring identifier, to avoid monitoring the downlink control channel that does not belong to the terminal side device and parsing the corresponding response message, and the power consumption of the terminal side device is further reduced.

In some possible implementations, the monitoring identifier is a monitoring identifier corresponding to the PUSCH resource information.

At least one piece of PUSCH resource information has a mapping relationship (for example, a first mapping relationship) with at least one monitoring identifier, so that the terminal side device can determine, based on a piece of PUSCH resource information (for example, first PUSCH resource information) by searching for the first mapping relationship, a monitoring identifier corresponding to the first PUSCH resource information. In this way, the terminal device side can determine a more accurate monitoring identifier, to avoid monitoring the downlink control channel that does not belong to the terminal side device and parsing the corresponding response message, and the power consumption of the terminal side device is further reduced.

In some possible implementations, the monitoring identifier is a monitoring identifier corresponding to a combination of the PUSCH resource information and the RACH resource information.

At least one combination of at least one piece of PUSCH resource information and at least one piece of RACH resource information may have a mapping relationship (for example, a second mapping relationship) with at least one monitoring identifier, so that the terminal side device can determine a corresponding monitoring identifier based on a combination of a piece of PUSCH resource information and a piece of RACH resource information. That is, the terminal side device can determine a more accurate monitoring identifier, to avoid monitoring the downlink control channel that does not belong to the terminal side device and parsing the corresponding response message, and the power consumption of the terminal side device is further reduced.

In some possible implementations, the monitoring identifier is a monitoring identifier corresponding to a combination of the PUSCH resource information and the reference signal resource information.

At least one combination of at least one piece of PUSCH resource information and at least one piece of reference signal resource information may be in a one-to-one correspondence with at least one monitoring identifier. In other words, when combinations of the reference signal resource information of a reference signal resource occupied for sending the reference signal and the PUSCH resource information of a PUSCH resource occupied for sending data are the same, corresponding monitoring identifiers are also the same. In this way, the terminal device side can determine a more accurate monitoring identifier, to avoid monitoring the downlink control channel that does not belong to the terminal side device and parsing the corresponding response message, and the power consumption of the terminal side device is further reduced.

In some possible implementations, the RACH resource information includes at least one of a preamble sequence code resource, a time-frequency resource identifier of the RACH, a time domain resource identifier of the RACH, or a frequency domain resource identifier of the RACH.

A RACH code resource may be the preamble sequence code resource, and different RACH code resources may be distinguished by using different RACH code resource identifiers, for example, preamble sequence indexes (prach-RootSequenceIndex).

In some possible implementations, the reference signal resource information includes at least one of a port resource identifier of the reference signal, a time-frequency resource identifier of the reference signal, a time domain resource identifier of the reference signal, or a frequency domain resource identifier of the reference signal.

The reference signal may be at least one of a dedicated demodulation reference signal (dedicated demodulation reference signal, DMRS), a channel state information reference signal (channel state information reference signal, CSI-RS) used for downlink channel measurement, or a synchronization signal block (synchronization signal block, SSB).

In some possible implementations, the PUSCH resource information includes at least one of a group identifier of a resource group to which the PUSCH belongs, a time domain resource identifier of the PUSCH, a frequency domain resource identifier of the PUSCH, or a time-frequency resource identifier of the PUSCH.

Different time domain resources may be distinguished by using different time domain resource identifiers, different frequency domain resources may be distinguished by using different frequency domain resource identifiers, and different time-frequency resources may be distinguished by using different time-frequency resource identifiers. The time domain resource identifier may be an index of a time unit. The time unit may be at least one of a frame, a subframe, a slot, a symbol, or the like. This is not limited in this application. Correspondingly, the index of the time unit may be a frame number, a subframe number, a slot number, or a symbol number. The frequency domain resource identifier may be an index of a frequency domain resource. The frequency domain resource may be at least one of a cell, a carrier, a subcarrier, or a bandwidth part. The time-frequency resource identifier may be an index of a time-frequency resource. The time-frequency resource may be at least one of a resource block (resource block, RB) or a resource element (resource element, RE). Correspondingly, the time-frequency resource identifier may be an RB number or an RE number. A resource group may be a resource combination of at least one of a time domain resource, a frequency domain resource, or a time-frequency resource in a plurality of periodicities, and different resource groups may be distinguished by using different resource group identifiers.

According to a second aspect, an information processing method is provided. The method includes: A network side device receives a physical uplink shared channel PUSCH, where the PUSCH carries uplink information; the network side device determines a monitoring identifier of a downlink control channel based on physical uplink shared channel PUSCH resource information, where the PUSCH resource information is used to indicate a resource occupied by the PUSCH; and the network side device sends the downlink control channel based on the monitoring identifier, where the downlink control channel carries information used to indicate a resource location of a downlink shared channel PDSCH, and the PDSCH is used to carry a response message of the uplink information.

The network side device receives the PUSCH, where the PUSCH carries the uplink information; determines the monitoring identifier of the downlink control channel based on the PUSCH resource information of the resource occupied by the PUSCH; further scrambles the downlink control channel based on the monitoring identifier, where the downlink control channel carries the information used to indicate the resource location of the PDSCH; and then sends the PDSCH at the resource location of the PDSCH, where the PDSCH carries the response message. In this way, the terminal side device avoids blindly monitoring, based on the monitoring identifier, a downlink control channel that does not belong to the terminal side device and parsing a corresponding response message, and power consumption of the terminal side device is reduced.

In some possible implementations, the method further includes: The network side device receives a random access channel RACH, where the RACH carries a preamble; and that the network side device determines a monitoring identifier of a downlink control channel based on physical uplink shared channel PUSCH resource information includes: The network side device determines the monitoring identifier based on the PUSCH resource information and random access channel RACH resource information, where the RACH resource information is used to indicate a resource occupied by the RACH.

The preamble may be carried in the RACH, and a resource occupied by the network side device for receiving the preamble is a resource occupied by the RACH that carries the preamble. The network side device may determine the monitoring identifier with reference to the PUSCH resource information and the RACH resource information. For example, for a combination of a piece of PUSCH resource information and a piece of RACH resource information, a monitoring identifier is obtained through derivation by using a rule or a function relationship. In this way, the terminal side device can determine a more accurate monitoring identifier, to avoid monitoring the downlink control channel that does not belong to the terminal side device and parsing the corresponding response message, and the power consumption of the terminal side device is further reduced.

In some possible implementations, the method further includes: The network side device receives a reference signal, where that the network side device determines a monitoring identifier of a downlink control channel based on physical uplink shared channel PUSCH resource information includes:

The network side device determines the monitoring identifier based on the PUSCH resource information and reference signal resource information, where the reference signal resource information is used to indicate a resource occupied by the reference signal.

The network side device may determine the monitoring identifier with reference to the PUSCH resource information and the reference signal resource information. For example, for a combination of a piece of PUSCH resource information and a piece of reference signal resource information, a monitoring identifier is obtained through derivation by using a rule or a function relationship. In this way, the terminal device side can determine a more accurate monitoring identifier, to avoid monitoring the downlink control channel that does not belong to the terminal side device and parsing the corresponding response message, and the power consumption of the terminal side device is further reduced.

In some possible implementations, the monitoring identifier is a monitoring identifier corresponding to the PUSCH resource information.

In some possible implementations, the monitoring identifier is a monitoring identifier corresponding to a combination of the PUSCH resource information and the RACH resource information.

In some possible implementations, the monitoring identifier is a monitoring identifier corresponding to a combination of the PUSCH resource information and the reference signal resource information.

In some possible implementations, the RACH resource information includes at least one of a preamble sequence code resource, a time-frequency resource identifier of the RACH, a time domain resource identifier of the RACH, or a frequency domain resource identifier of the RACH.

In some possible implementations, the reference signal resource information includes at least one of a port resource identifier of the reference signal, a time-frequency resource identifier of the reference signal, a time domain resource identifier of the reference signal, or a frequency domain resource identifier of the reference signal.

In some possible implementations, the PUSCH resource information includes at least one of a group identifier of a resource group to which the PUSCH belongs, a time domain resource identifier of the PUSCH, a frequency domain resource identifier of the PUSCH, or a time-frequency resource identifier of the PUSCH.

According to a third aspect, an information processing method is provided. The method includes:

A first terminal side device sends uplink information on a preset uplink shared channel PUSCH resource through a PUSCH, where the first terminal side device is in an inactive state, an idle state, or an enhanced idle state.

The first terminal side device monitors a downlink control channel based on a monitoring identifier, where the downlink control channel carries information used to indicate a resource location of a downlink shared channel PDSCH, and the PDSCH is used to carry a response message of the uplink information.

After sending the uplink information on the preset PUSCH resource through the PUSCH, the first terminal side device in the inactive state, the idle state, or the enhanced idle state can monitor the downlink control channel by using the monitoring identifier, where the downlink control channel carries the information used to indicate the resource location of the PDSCH. Then, the first terminal side device receives the PDSCH at the resource location of the PDSCH, where the PDSCH carries the response message. In other words, in this embodiment of this application, in a scenario in which the terminal device is in the inactive state or in the idle state, the terminal device can send the uplink information on the preset PUSCH resource. Compared with sending the uplink information by requesting an uplink grant, power consumption of the terminal side device is reduced.

In some possible implementations, before that the first terminal side device monitors a downlink control channel based on a monitoring identifier, the method further includes:

The first terminal side device determines the monitoring identifier, where the monitoring identifier is a monitoring identifier corresponding to at least two terminal side devices, in a plurality of terminal side devices, that have sent the uplink information.

After sending the uplink information on the preset PUSCH resource through the PUSCH, the at least two terminal side devices in the plurality of terminal side devices can monitor the downlink control channel by using the monitoring identifier corresponding to the terminal side devices that have sent the uplink information. In other words, a terminal side device that has not sent the uplink information does not need to monitor the downlink control channel by using the monitoring identifier. In this way, it is avoided that the terminal side device that has not sent the uplink information monitors the downlink control channel by using the monitoring identifier, and the power consumption of the terminal side device is further reduced.

In some possible implementations, the monitoring identifier is a monitoring identifier corresponding to a combination of a terminal side device that has sent the uplink information and a current state of the terminal side device.

The at least two terminal side devices that have sent the uplink information may further correspond to different monitoring identifiers based on states of the terminal side devices. In other words, at least one state of the terminal side device has a mapping relationship with at least one monitoring identifier. The terminal side device may determine a corresponding monitoring identifier based on the current state of the terminal side device and the mapping relationship. In this way, the terminal side device can more accurately determine the monitoring identifier corresponding to the terminal side device, and power consumption of the terminal side device is further reduced.

In some possible implementations, the method further includes:

The first terminal side device starts a timer at a moment at which the uplink information is sent.

That the first terminal side device monitors a downlink control channel based on a monitoring identifier includes:

The first terminal side device monitors the downlink control channel based on the monitoring identifier in preset duration of the timer.

The first terminal side device may set the timer, and the preset duration may be set for the timer. To be specific, when the timer counts to the preset duration, it indicates that the timer expires. Before the timer expires, the first terminal side device may receive the downlink control channel based on the monitoring identifier. In this way, it is avoided that the first terminal side device keeps monitoring an expired downlink control channel, and power consumption of the terminal side device is further reduced.

According to a fourth aspect, an information processing apparatus is provided. The apparatus may be a terminal side device, or may be a chip in a terminal side device. The apparatus has a function of implementing the first aspect and various possible implementations of the first aspect. The function may be implemented by hardware, or may be implemented by hardware by executing corresponding software. The hardware or the software includes one or more modules corresponding to the foregoing functions.

In a possible design, the apparatus includes a processing module. Optionally, the apparatus further includes a transceiver module. The transceiver module may be, for example, at least one of a transceiver, a receiver, and a transmitter. The transceiver module may include a radio frequency circuit or an antenna. The processing module may be a processor.

Optionally, the apparatus further includes a storage module. The storage module may be, for example, a memory. When the apparatus includes the storage module, the storage module is configured to store an instruction. The processing module is connected to the storage module. The processing module may execute the instruction stored in the storage module or another instruction, so that the apparatus performs the method according to any one of the foregoing aspects. In this design, the apparatus may be a terminal side device or a network side device.

In another possible design, when the apparatus is a chip, the chip includes a processing module. Optionally, the chip further includes a transceiver module. The transceiver module may be, for example, an input/output interface, a pin, or a circuit on the chip. For example, the processing module may be a processor. The processing module may execute an instruction, so that the chip in the terminal side device performs the method according to any one of the first aspect and the possible implementations of the first aspect.

Optionally, the processing module may execute an instruction in a storage module. The storage module may be a storage module in the chip, for example, a register or a cache. Alternatively, the storage module may be located in the terminal side device, but located outside the chip, for example, may be a read-only memory (read-only memory, ROM), another type of static storage device that can store static information and instructions, or a random access memory (random access memory, RAM).

The processor mentioned above may be a general-purpose central processing unit (CPU), a microprocessor, an application-specific integrated circuit (application-specific integrated circuit, ASIC), or one or more integrated circuits configured to control program execution of the method according to the foregoing aspects.

According to a fifth aspect, an information processing apparatus is provided. The apparatus may be a network side device, or may be a chip in a network side device. The apparatus has a function of implementing the second aspect and various possible implementations of the second aspect. The function may be implemented by hardware, or may be implemented by hardware by executing corresponding software. The hardware or the software includes one or more modules corresponding to the foregoing functions.

In a possible design, the apparatus includes a processing module. Optionally, the apparatus further includes a transceiver module. The transceiver module may be, for example, at least one of a transceiver, a receiver, and a transmitter. The transceiver module may include a radio frequency circuit or an antenna. The processing module may be a processor.

Optionally, the apparatus further includes a storage module. The storage module may be, for example, a memory. When the apparatus includes the storage module, the storage module is configured to store an instruction. The processing module is connected to the storage module. The processing module may execute the instruction stored in the storage module or another instruction, so that the apparatus performs the method according to any one of the foregoing aspects. In this design, the apparatus may be a terminal side device or a network side device.

In another possible design, when the apparatus is a chip, the chip includes a processing module. Optionally, the chip further includes a transceiver module. The transceiver module may be, for example, an input/output interface, a pin, or a circuit on the chip. For example, the processing module may be a processor. The processing module may execute an instruction, so that the chip in the network side device performs the method according to any one of the second aspect and the possible implementations of the second aspect.

Optionally, the processing module may execute an instruction in a storage module. The storage module may be a storage module in the chip, for example, a register or a cache. Alternatively, the storage module may be located in the terminal side device, but located outside the chip, for example, may be a read-only memory (read-only memory, ROM), another type of static storage device that can store static information and instructions, or a random access memory (random access memory, RAM).

The processor mentioned above may be a general-purpose central processing unit (CPU), a microprocessor, an application-specific integrated circuit (application-specific integrated circuit, ASIC), or one or more integrated circuits configured to control program execution of the method according to the foregoing aspects.

According to a sixth aspect, an information processing apparatus is provided. The apparatus may be a terminal side device, or may be a chip in a terminal side device. The apparatus has a function of implementing the third aspect and various possible implementations of the third aspect. The function may be implemented by hardware, or may be implemented by hardware by executing corresponding software. The hardware or the software includes one or more modules corresponding to the foregoing functions.

In a possible design, the apparatus includes a processing module. Optionally, the apparatus further includes a transceiver module. The transceiver module may be, for example, at least one of a transceiver, a receiver, and a transmitter. The transceiver module may include a radio frequency circuit or an antenna. The processing module may be a processor.

Optionally, the apparatus further includes a storage module. The storage module may be, for example, a memory. When the apparatus includes the storage module, the storage module is configured to store an instruction. The processing module is connected to the storage module. The processing module may execute the instruction stored in the storage module or another instruction, so that the apparatus performs the method according to any one of the third aspect or the possible implementations of the third aspect. In this design, the apparatus may be a terminal side device or a network side device.

In another possible design, when the apparatus is a chip, the chip includes a processing module. Optionally, the chip further includes a transceiver module. The transceiver module may be, for example, an input/output interface, a pin, or a circuit on the chip. For example, the processing module may be a processor. The processing module may execute an instruction, so that the chip in the terminal side device performs the method according to any one of the third aspect and the possible implementations of the third aspect.

Optionally, the processing module may execute an instruction in a storage module. The storage module may be a storage module in the chip, for example, a register or a cache. Alternatively, the storage module may be located in the terminal side device, but located outside the chip, for example, may be a read-only memory (read-only memory, ROM), another type of static storage device that can store static information and instructions, or a random access memory (random access memory, RAM).

The processor mentioned above may be a general-purpose central processing unit (CPU), a microprocessor, an application-specific integrated circuit (application-specific integrated circuit, ASIC), or one or more integrated circuits configured to control program execution of the method according to the foregoing aspects.

According to a seventh aspect, a computer storage medium is provided. The computer storage medium stores program code, and the program code is used to indicate an instruction of executing the method according to any one of the first to the third aspects or the possible implementations of the first to the third aspects.

According to an eighth aspect, a computer program product including an instruction is provided. When the instruction is run on a computer, the computer is enabled to perform the method according to any one of the first to the third aspects or the possible implementations of the first to the third aspects.

According to a ninth aspect, a processor is provided. The processor is configured to be coupled to a memory, and is configured to perform the method according to any one of the first to the third aspects or the possible implementations of the first to the third aspects.

According to a tenth aspect, a chip is provided. The chip includes a processor and a communications interface. The communications interface is configured to communicate with an external component or an internal component. The processor is configured to implement the method according to any one of the first to the third aspects or the possible implementations of the first to the third aspects.

Optionally, the chip may further include a memory. The memory stores an instruction. The processor is configured to execute the instruction stored in the memory or another instruction. When the instruction is executed, the processor is configured to implement the method according to any one of the first to the third aspects or the possible implementations of the first to the third aspects.

Optionally, the chip may be on the foregoing terminal side device or network side device.

Based on the technical solution, the terminal side device sends the uplink information through the PUSCH; determines the monitoring identifier of the downlink control channel based on the PUSCH resource information of the resource occupied by the PUSCH; further monitors the downlink control channel based on the monitoring identifier, where the downlink control channel carries the information used to indicate the resource location of the PDSCH; and then receives the PDSCH at the resource location of the PDSCH, where the PDSCH carries the response message. In this way, the terminal side device avoids blindly monitoring, based on the monitoring identifier, a downlink control channel that does not belong to the terminal side device and parsing a corresponding response message, and power consumption of the terminal side device is reduced.

### BRIEF DESCRIPTION OF DRAWINGS

FIG. 1 is a schematic diagram of a communications system according to this application;
FIG. 2 is a schematic flowchart of information processing according to a conventional solution;
FIG. 3 is a schematic flowchart of an information processing method according to an embodiment of this application;
FIG. 4 is a schematic flowchart of an information processing method according to another embodiment of this application;
FIG. 5 is a schematic block diagram of an information processing apparatus according to an embodiment of this application;
FIG. 6 is a schematic structural diagram of an information processing apparatus according to an embodiment of this application;
FIG. 7 is a schematic block diagram of an information processing apparatus according to another embodiment of this application;
FIG. 8 is a schematic structural diagram of an information processing apparatus according to another embodiment of this application;
FIG. 9 is a schematic diagram of a signal processing apparatus according to still another embodiment of this application;
FIG. 10 is a schematic diagram of a signal processing apparatus according to still another embodiment of this application;
FIG. 11 is a schematic diagram of a signal processing apparatus according to still another embodiment of this application; and
FIG. 12 is a schematic diagram of a signal processing apparatus according to still another embodiment of this application.

### DESCRIPTION OF EMBODIMENTS

The following describes technical solutions in the embodiments of this application with reference to the accompanying drawings.

The technical solutions in the embodiments of this application may be used in various communications systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunication system, UMTS), a future 5th generation (5th generation, 5G) system, or a new radio (new radio, NR) system.

By way of example rather than limitation, in the embodiments of this application, a terminal side device in the embodiments of this application may refer to user equipment (user equipment, UE), an access terminal, a subscriber unit, a subscriber station, a mobile station, a mobile station, a remote station, a remote terminal, a mobile device, a user terminal, a terminal, a wireless communications device, a user agent, or a user apparatus, or at least one chip in the devices. The terminal side device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, a terminal device in a future 5G network, a terminal device in a future evolved public land mobile communications network (public land mobile network, PLMN), at least one chip in the terminal devices, or the like. This is not limited in the embodiments of this application, and is not distinguished in the following embodiments.

By way of example rather than limitation, in the embodiments of this application, the terminal side device may alternatively be a wearable device or at least one chip in a wearable device. The wearable device may also be referred to as a wearable intelligent device, and is a general term for wearable devices such as glasses, gloves, watches, clothes, and shoes that are developed by applying wearable technologies in intelligent designs of daily wear. The wearable device is a portable device that can be directly worn on a body or integrated into clothes or an accessory of a user.

In addition, in the embodiments of this application, the terminal side device may alternatively be a terminal device in an internet of things (internet of things, IoT) system or at least one chip in the terminal device. The IoT is an important part in development of future information technologies. A main technical feature of the IoT is to connect an object to a network by using a communications technology, to implement an intelligent network for human-machine interconnection and thing-thing interconnection.

In addition, in this application, the terminal side device may alternatively include a sensor such as an intelligent printer, a train detector, or a gas station, or at least one chip in the sensors. Main functions of the terminal side device include collecting data (a part of terminal devices), receiving control information and downlink data that are of a network device, sending an electromagnetic wave, and transmitting uplink data to the network device.

A network side device in the embodiments of this application may be a device configured to communicate with a terminal device. The network side device may be an evolved NodeB (evolved NodeB, eNB or eNodeB) in an LTE system, and may further be a radio controller in a cloud radio access network (cloud radio access network, CRAN) scenario. Alternatively, the network device may be a relay station, a vehicle-mounted device, a wearable device, a network device in a future 5G network, a network device in a future evolved PLMN network, or the like. The network side device may be an access point (access point, AP) in a WLAN, may be a gNB in a new radio (new radio, NR) system, or may be at least one chip in the devices. This is not limited in the embodiments of this application.

In addition, in the embodiments of this application, the network side device provides a service for a cell. The terminal side device communicates with the network side device by using a transmission resource (for example, a time domain resource or a frequency domain resource) used in the cell. The cell may be a cell corresponding to the network side device (for example, a base station). The cell may belong to a macro base station, or may belong to a base station corresponding to a small cell (small cell). The small cell herein may include a metro cell (metro cell), a micro cell (micro cell), a pico cell (pico cell), a femto cell (femto cell), and the like. The small cells have features such as small coverage and low transmit power, and are applicable to providing a high-rate data transmission service.

In addition, in the embodiments of this application, the foregoing base stations, such as a macro base station, a micro base station, an indoor hotspot, and a relay node, have functions of sending a radio wave to the terminal device, to implement downlink data transmission on one hand and send scheduling information to control uplink transmission on the other hand; and receiving a radio wave sent by the terminal device to receive uplink data transmission.

The foregoing listed functions and specific implementations of the terminal device, an access network device, and a core network device are merely examples for description, and this application is not limited thereto.

In the embodiments of this application, the terminal device or the network device includes hardware such as a central processing unit (central processing unit, CPU), a memory management unit (memory management unit, MMU), and a memory.

To facilitate understanding of the embodiments of this application, the following several concepts are introduced before the embodiments of this application are described.

### Inactive state:

A terminal side device in an inactive state stores an access stratum (access stratum, AS) context and an active radio network temporary identifier (inactive radio network temporary identity, I-RNTI). In a radio access network (Wireless access network, RAN) notification area, each terminal side device corresponds to a unique I-RNTI. The terminal side device may receive a paging message initiated by the access network by using the I-RNTI, and further perform cell reselection based on the paging message. When reselecting a new RAN, the terminal side device initiates an RRC connection resume request to notify a network, where the request carries the I-RNTI of the terminal side device. The access network may determine, based on the I-RNTI, an access node that stores the access stratum context of the terminal side device.

### Enhanced idle state:

A terminal side device in an inactive state stores an access stratum context and a resume identity (resume identity). In a radio access network (Wireless access network, RAN) notification area, each terminal side device corresponds to a unique resume identity. The terminal side device may receive a paging message initiated by the access network by using the resume identity, and further perform cell reselection based on the paging message. When reselecting a new RAN, the terminal side device initiates an RRC connection resume request to notify a network, where the request carries the resume identity of the terminal side device. The access network may determine, based on the resume identity, an access node that stores the access stratum context of the terminal side device.

### Idle state:

A terminal side device in an idle state stores a non-access stratum context and a non-access stratum identifier that are of the terminal side device. The terminal side device may perform cell reselection, and may receive paging initiated by a core network to establish a connection to the network.

### Cell:

In a resource management or mobility management manner, coverage of each network device may be divided into at least one area, and one of the at least one area is a cell. At least one carrier may be used in one cell for communication.

### Carrier:

A carrier is a frequency domain resource from a perspective of a physical layer. One carrier includes one segment of contiguous or non-contiguous frequency resources, and is used to carry communication data between a network side device and a terminal side device. This is not limited in the embodiments of this application.

A carrier may be divided into at least one bandwidth part (bandwidth part, BWP), which may be also referred to as a carrier bandwidth part (carrier bandwidth part), a subband (subband) bandwidth, a narrowband (narrowband) bandwidth, or the like. A name thereof is not limited in this application, and different names are not distinguished in the following embodiments. A plurality of uplink bandwidth parts may be configured on an uplink carrier, and a plurality of downlink bandwidth parts may be configured on a downlink carrier. A plurality of bandwidth parts in the embodiments of this application may be located in a same cell or on a same carrier, or may be located in different cells or on different carriers.

For example, one BWP may include K (K>0) consecutive subcarriers. Alternatively, one BWP is a frequency domain resource in which N non-overlapping consecutive resource blocks (resource block, RB) are located. A subcarrier spacing of the RBs may be 15 kHz, 30 kHz, 60 kHz, 120 kHz, 240 kHz, 480 kHz, or another value. Alternatively, one BWP is a frequency domain resource in which M non-overlapping consecutive resource block groups (resource block group, RBG) are located. One RBG includes P consecutive RBs. A subcarrier spacing of the RBs may be 15 kHz, 30 kHz, 60 kHz, 120 kHz, 240 kHz, 480 kHz, or another value, for example, an integer multiple of 2.

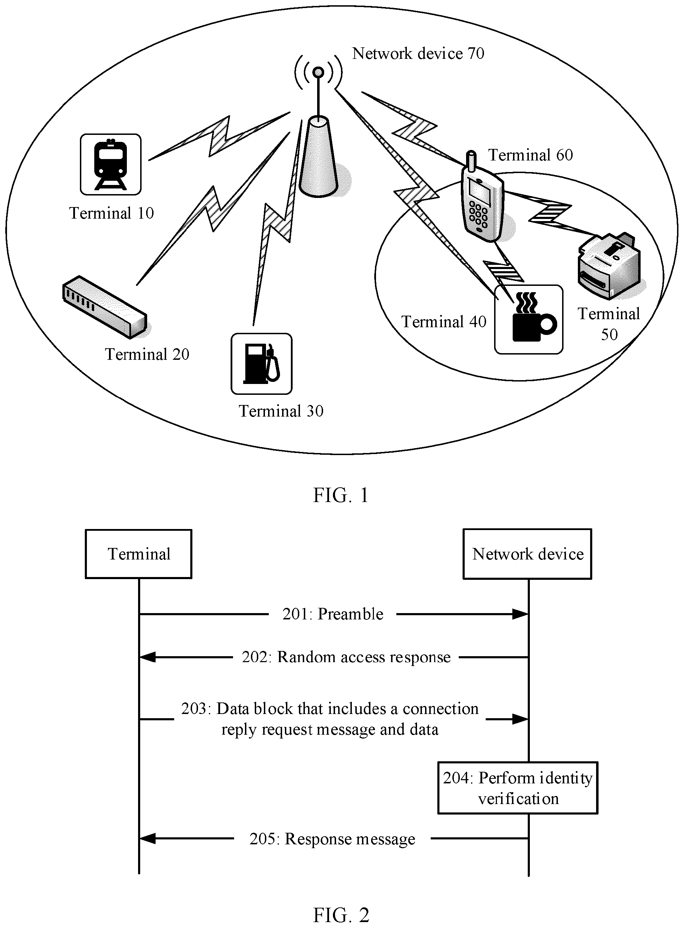

FIG. 1 is a schematic diagram of a communications system according to this application. The communications system in FIG. 1 may include at least one terminal (for example, a terminal 10, a terminal 20, a terminal 30, a terminal 40, a terminal 50, and a terminal 60) and a network device 70. The network device 70 is configured to provide a communications service for the terminal and access a core network. The terminal may access a network by searching for a synchronization signal, a broadcast signal, or the like sent by the network device 70, to communicate with the network. The terminal 10, the terminal 20, the terminal 30, the terminal 40, and the terminal 60 in FIG. 1 may directly perform uplink/downlink transmission with the network device 70. In addition, the terminal 40, the terminal 50, and the terminal 60 may also be considered as a communications system, and the terminal 60 may send scheduling information to the terminal 40 and the terminal 60.

In addition, the terminal 40, the terminal 50, and the terminal 60 may also be considered as a communications system. The terminal 60 may send downlink signals to the terminal 40 and the terminal 50, or may receive uplink signals sent by the terminal 40 and the terminal 50.

FIG. 2 is a schematic flowchart of information processing according to a conventional solution.

201: A terminal side device in an inactive state sends a preamble (preamble) to a network side device on a random access channel.

202: The network side device feeds back a random access response (random access response, RAR) to the terminal side device, where the random access response includes a timing advance (timing advance, TA).

203: The terminal side device carries a connection reply request message and data in a data block, where the connection reply request message includes a unique identifier and identity authentication that are of the terminal side device.

204: The network side device receives identification information of the terminal side device, and performs identity verification.

205: If the identity verification succeeds, the network side device sends a PDCCH, where the PDCCH carries information (for example, downlink control information downlink control information) used to indicate a resource location of a PDSCH.

206: The terminal side device receives the PDSCH at the resource location of the PDSCH, where the PDSCH carries a response message, and the response message may include feedback information, indication information used to indicate whether the terminal side device remains in a current state, and a paging message. For example, the indication information may indicate that the terminal side device remains in the inactive state, the feedback information is used to indicate whether the network side device correctly receives the data, and the paging message includes an identifier of a terminal side device that the network side device wants to page.

It should be understood that the response message may be a radio resource control (wireless resource control, RRC) response message.

The RAR in step 202 may carry an uplink grant used to indicate a resource for transmitting the data block in step 203. Alternatively, the terminal side device may transmit the data block on a resource preconfigured by the network side device. If the terminal side device transmits the data block on the resource preconfigured by the network side device, the terminal side device may monitor the physical downlink control channel (physical downlink control channel, PDCCH) based on a paging radio network temporary identifier (paging Radio Network Temporary Identity, P-RNTI), where the PDCCH carries the information used to indicate the resource location of the PDSCH. In this way, the terminal side device can receive the PDSCH at the resource location of the PDSCH, and the PDSCH carries the paging message. Then, the terminal side device determines whether the paging message is used to page the terminal side device, for example, whether the paging message has an identifier corresponding to the terminal side device.

In other words, the terminal side device needs to receive all response messages to determine whether there is an identifier of the terminal side device. That is, the terminal side device needs to decode all the response messages regardless of whether there is paging for the terminal side device. Consequently, power consumption of the terminal side device may be relatively high.

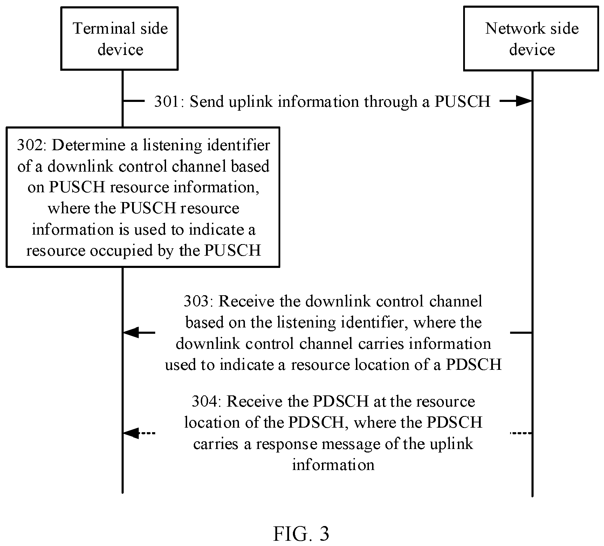

FIG. 3 is a schematic flowchart of an information processing method according to an embodiment of this application.

301: A terminal side device sends uplink information through a physical uplink shared channel (physical uplink shared channel, PUSCH). Correspondingly, a network side device receives the uplink shared channel, where the uplink shared channel carries the uplink information.

It should be noted that the uplink information may include at least one of a connection establishment request, a connection resume request, a connection re-establishment request, or uplink service data.

Specifically, the terminal side device may send the uplink information through the PUSCH. That is, the uplink information is carried in the PUSCH.

It should be understood that the terminal side device in this embodiment of this application may be a terminal side device in an idle state, an enhanced idle state, or an inactive state, or may be a terminal side device in an active state. This is not limited in this application.

Optionally, a resource occupied for sending the uplink information, namely, a resource occupied by the PUSCH, may be preconfigured by the network side device, may be agreed on in a protocol, or may be obtained through derivation by using a preset rule. This is not limited in this application.

Specifically, the network side device may include indication information used to indicate the PUSCH resource in radio resource control (radio resource control, RRC) dedicated signaling or a broadcast message.

302: The terminal side device determines a monitoring identifier of a downlink control channel based on PUSCH resource information, where the PUSCH resource information is used to indicate the resource occupied by the PUSCH.

Specifically, a resource occupied by the terminal side device for sending the uplink information may be a resource occupied by the PUSCH that carries the uplink information. The terminal side device may determine the monitoring identifier of the downlink control channel based on the PUSCH resource information used to indicate the resource occupied by the PUSCH. For example, a monitoring identifier may be obtained through derivation based on a specific piece of PUSCH resource information by using a rule or a function relationship. In this way, the terminal side device can learn of a corresponding monitoring identifier based on the PUSCH resource information.

It should be noted that step 302 may alternatively be performed by the network side device. To be specific, the network side device determines the monitoring identifier of the downlink channel based on the PUSCH resource information. Specifically, the resource occupied by the PUSCH may be a resource used by the network side device to receive the PUSCH.

Optionally, the downlink control channel may be a PDCCH, for example, a PDCCH in LTE or a PDCCH in NR. The PDCCH is used as an example for description in the following embodiment.

Optionally, the monitoring identifier may be a monitoring identifier corresponding to the PUSCH resource information.

Specifically, at least one piece of PUSCH resource information has a mapping relationship (for example, a first mapping relationship) with at least one monitoring identifier, so that the terminal side device can determine, based on a piece of PUSCH resource information (for example, first PUSCH resource information) by searching for the first mapping relationship, a monitoring identifier corresponding to the first PUSCH resource information.

Optionally, the resource occupied by the PUSCH may be at least one of a resource group, a time domain resource, a frequency domain resource, or a time-frequency resource.

Specifically, different time domain resources may be distinguished by using different time domain resource identifiers, different frequency domain resources may be distinguished by using different frequency domain resource identifiers, and different time-frequency resources may be distinguished by using different time-frequency resource identifiers. The time domain resource identifier may be an index of a time unit. The time unit may be at least one of a frame, a subframe, a slot, a symbol, or the like. This is not limited in this application. Correspondingly, the index of the time unit may be a frame number, a subframe number, a slot number, or a symbol number. The frequency domain resource identifier may be an index of a frequency domain resource. The frequency domain resource may be at least one of a cell, a carrier, a subcarrier, or a bandwidth part. The time-frequency resource identifier may be an index of a time-frequency resource. The time-frequency resource may be at least one of a resource block (resource block, RB) or a resource element (resource element, RE). Correspondingly, the time-frequency resource identifier may be an RB number or an RE number. A resource group may be a resource combination of at least one of a time domain resource, a frequency domain resource, or a time-frequency resource in a plurality of periodicities, and different resource groups may be distinguished by using different resource group identifiers.

It should be understood that a resource group may also be referred to as "a set of resources".

Optionally, the PUSCH resource information includes at least one of a group identifier of a resource group to which the resource occupied by the PUSCH belongs, a time domain resource identifier, a frequency domain resource identifier, or a time-frequency resource identifier.

Specifically, it is assumed that the PUSCH resource information includes the group identifier of the resource group to which the resource occupied by the PUSCH belongs. If resources occupied by the terminal side device for sending the PUSCH belong to a same resource group, a same monitoring identifier may be used to monitor the downlink control channel. For example, monitoring identifier (configured grant RNTI, CG-RNTI) = 1 + CG Index, where CG Index is a group identifier of each resource group.

If the PUSCH resource information includes the time domain resource identifier, when the terminal side device sends the PUSCH by using time domain resources corresponding to a same time domain resource identifier, the terminal side device may monitor the downlink control channel by using a same monitoring identifier.

If the PUSCH resource information includes the frequency domain resource identifier, when the terminal side device sends the PUSCH by using frequency domain resources corresponding to a same frequency domain resource identifier, the terminal side device may monitor the downlink control channel by using a same monitoring identifier. For example, CG-RNTI = 1 + BWP ID, where BWP ID is a bandwidth part identifier. Alternatively, CG-RNTI = 1 + f_id + 8 × ul_carrier_id, where f_id is a resource index number (0 ≤ f_id < 8) of the PUSCH in frequency domain, ul carrier id is a carrier identifier of a carrier on which a frequency domain resource occupied by the PUSCH is located, and ul_carrier_id may be used to identify whether a carrier is an uplink (uplink, UL) carrier or an enhanced uplink (supplementary uplink, SUL) carrier. For example, if ul carrier id is 0, it indicates that the carrier is the UL carrier; if ul_carrier_id is 1, it indicates that the carrier is the SUL carrier.

If the PUSCH resource information includes the resource group identifier and the frequency domain resource identifier, when the terminal side device sends the PUSCH by using resources corresponding to a same combination of the resource group identifier and the frequency domain resource identifier, the terminal side device may monitor the downlink control channel by using a same monitoring identifier. For example, CG-RNTI = 1 + CG Index + maximum quantity of CG resources on one carrier × ul_carrier_id, where CG indexes of the UL carrier and the SUL carrier are not uniformly numbered. For example, the CG indexes of the UL carrier and the SUL carrier both start from 0, and the CG indexes of the two carriers have same numbers.

If the PUSCH resource information includes the time-frequency resource identifier, when the terminal side device sends the PUSCH by using resources corresponding to a same time-frequency resource identifier, the terminal side device may monitor the downlink control channel by using a same monitoring identifier.

If the PUSCH resource information includes the time domain resource identifier and the frequency domain resource identifier, when the terminal side device sends the PUSCH by using resources corresponding to a same time domain resource identifier and a same frequency domain resource identifier, the terminal side device may monitor the downlink control channel by using a same monitoring identifier. For example, CG-RNTI = 1 + s_id + 14 × t_id + 14 × 80 × f_id, or CG-RNTI = 1+ s_id + 14 × t_id + 14 × 80 × ul_carrier_id, where s_id is an index number (0 ≤ s_id < 14) of the first symbol in the resource occupied by the PUSCH, t_id is an index number (0 ≤ t_id < 80) of the first slot in a system frame of the PUSCH resource, and ul_carrier_id is an identifier of a carrier used to send the PUSCH.

Optionally, before sending the uplink information through the PUSCH, the terminal side device may further send a preamble (preamble) through a random access channel (RACH). In this case, the terminal side device may determine the monitoring identifier based on RACH resource information, where the RACH resource information is used to indicate a resource occupied by the RACH.

Optionally, the RACH resource may be at least one of a time domain resource, a frequency domain resource, a time-frequency resource, or a code resource group occupied by the RACH.

Specifically, the RACH code resource may be a preamble sequence code resource, and different RACH code resources may be distinguished by using different RACH code resource identifiers, for example, preamble sequence indexes (prach-RootSequenceIndex).

Optionally, the RACH resource information may include a time domain resource identifier, a frequency domain resource identifier, a time-frequency resource identifier, a code resource identifier, or a RACH configuration identifier.

Specifically, the RACH configuration identifier may be prach-ConfigurationIndex.

Optionally, the monitoring identifier is a monitoring identifier corresponding to the RACH resource information.

Specifically, at least one piece of RACH resource information may have a mapping relationship (for example, a second mapping relationship) with at least one monitoring identifier, so that the terminal side device can determine a corresponding monitoring identifier based on a piece of RACH resource information.

For example, CG-RNTI = 1 + prach-RootSequenceIndex.

For example, CG-RNTI = 1 + prach-ConfigurationIndex.

For example, CG-RNTI = 1 + prach-ConfigurationIndex + 255 × prach-RootSequenceIndex.

Optionally, before sending the uplink information through the PUSCH, the terminal side device may further send a preamble (preamble) through a random access channel (RACH). In this case, step 302 may be specifically determining the monitoring identifier based on the PUSCH resource information and RACH resource information, where the RACH resource information is used to indicate a resource occupied by the RACH.

Specifically, the preamble may be carried in the RACH, and a resource occupied by the terminal side device for sending the preamble is a resource occupied by the RACH that carries the preamble. The terminal side device may determine the monitoring identifier with reference to the PUSCH resource information and the RACH resource information. For example, for a combination of a piece of PUSCH resource information and a piece of RACH resource information, a monitoring identifier is obtained through derivation by using a rule or a function relationship.

Optionally, the monitoring identifier is a monitoring identifier corresponding to the PUSCH resource information and the RACH resource information.

Specifically, at least one combination of at least one piece of PUSCH resource information and at least one piece of RACH resource information may have a mapping relationship (for example, a second mapping relationship) with at least one monitoring identifier, so that the terminal side device can determine a corresponding monitoring identifier based on a combination of a piece of PUSCH resource information and a piece of RACH resource information.

It should be noted that monitoring identifiers corresponding to different combinations may be the same or may be different. This is not limited in this application. For example, a part of different combinations correspond to a same monitoring identifier.

Optionally, at least one combination of at least one piece of PUSCH resource information and at least one piece of RACH resource information may be in a one-to-one correspondence with at least one monitoring identifier. In other words, when combinations of the RACH resource information of the RACH resource occupied for sending the preamble and the PUSCH resource information of the PUSCH resource occupied for sending data are the same, corresponding monitoring identifiers are also the same.

For example, description is provided by using an example in which the RACH resource information is prach-RootSequenceIndex, and the PUSCH resource information is a slot symbol index and a symbol index. In this case, CG-RNTI = 1 + s_id + 14 × t_id + 8 × prach-RootSequenceIndex, where s_id is an index number of the first symbol in a time domain resource occupied by the PUSCH, t_id is an index number (0 ≤ t_id < 80) of the first slot in a system frame of a time domain resource occupied by the PUSCH, and prach-RootSequenceIndex is an index of a sequence for sending the preamble.

For another example, description is provided by using an example in which the RACH resource information is prach-RootSequenceIndex and prach-ConfigurationIndex, and the PUSCH resource information is a slot symbol index and a symbol index. In this case, CG-RNTI = 1 + s_id + 14 × t_id + 14 × 80 × prach-ConfigurationIndex +14 ×80 × 255 × prach-RootSequenceIndex, where s_id is an index number of the first symbol in a time domain resource occupied by the PUSCH, t_id is an index number (0 ≤ t_id < 80) of the first slot in a system frame of a time domain resource occupied by the PUSCH, prach-RootSequenceIndex is an index of a sequence for sending the preamble, and prach-ConfigurationIndex is a RACH configuration identifier for sending the preamble.

For another example, description is provided by using an example in which the RACH resource information is prach-RootSequenceIndex, and the PUSCH resource information is a frequency domain resource index. In this case, CG-RNTI = 1 + f_id + 8 × prach-RootSequenceIndex, where f_id is a resource index number (0 ≤ f_id < 8) of a frequency domain resource occupied by the RACH, prach-RootSequenceIndex is an index of a sequence for sending the preamble, and prach-ConfigurationIndex is a RACH configuration identifier for sending the preamble.

For another example, if the RACH resource information is prach-RootSequenceIndex and prach-ConfigurationIndex, and the PUSCH resource information is a frequency domain resource index, CG-RNTI = 1 + f_id + 8 × prach-ConfigurationIndex + 8 × 255 × prach-RootSequenceIndex.

For another example, if the RACH resource information is prach-RootSequenceIndex, prach-ConfigurationIndex, and a frequency domain resource index of the RACH, and the PUSCH resource information is a frequency domain resource index, CG-RNTI = CG-RNTI = 1 + s_id + 14 × t_id + 14 × 80 × f_id + 14 × 80 × 8 × Pusch f-id, where s_id is an index number (0 ≤ s_id < 14) of the first symbol in the resource occupied by the RACH, t_id is an index number (0 ≤ t_id < 80) of the first slot in a system frame of the resource occupied by the RACH, f id is a resource index number (0 ≤ f id < 8) of the resource occupied by the RACH, and Pusch f-id is a frequency domain resource identifier of the resource occupied by the PUSCH.

For another example, if the RACH resource information is a time domain resource index of the RACH, and the PUSCH resource information is a time domain resource index, CG-RNTI = 1 + s_id + 14 × t_id + 14 × 80 × f_id + 14 × 80 × 8 × Pusch S_id, where s_id is an index number (0 ≤ s_id < 14) of the first symbol in the resource occupied by the RACH, t_id is an index number (0 ≤ t_id < 80) of the first slot in a system frame of the resource occupied by the RACH, f id is a resource index number (0 ≤ f id < 8) of the resource occupied by the RACH, and Pusch f-id is a time domain resource identifier of the resource occupied by the PUSCH.

Optionally, before sending the uplink information, the terminal side device may further send a reference signal to the network side device. The reference signal is used by the network side device for channel estimation, so that the terminal side device can determine the monitoring identifier based on reference signal resource information and the PUSCH resource information. The reference signal resource information is used to indicate a resource occupied by the reference signal.

Specifically, the terminal side device may determine the monitoring identifier with reference to the PUSCH resource information and the reference signal resource information. For example, for a combination of a piece of PUSCH resource information and a piece of reference signal resource information, a monitoring identifier is obtained through derivation by using a rule or a function relationship.

Optionally, the reference signal may be at least one of a dedicated demodulation reference signal (dedicated demodulation reference signal, DMRS), a channel state information reference signal (channel state information reference signal, CSI-RS) used for downlink channel measurement, or a synchronization signal block (synchronization signal block, SSB).

Specifically, the reference signal resource may include at least one of a time-frequency resource, a time domain resource, a frequency domain resource, or a port resource.

It should be understood that the functions and specific examples of the reference signal that are listed above are merely examples for description, and shall not constitute any limitation on this application. This application does not exclude a possibility of defining a reference signal with another function or purpose in a future protocol. In the following embodiment, the DMRS is used as an example for description. Different DMRSs may be distinguished by using different DMRS indexes, for example, may be distinguished by using antenna port numbers 0 to 31.

Optionally, at least one combination of at least one piece of PUSCH resource information and at least one piece of reference signal resource information may be in a one-to-one correspondence with at least one monitoring identifier. In other words, when combinations of reference signal resource information of a reference signal resource occupied for sending a reference signal and PUSCH resource information of a PUSCH resource occupied for sending data are the same, corresponding monitoring identifiers are also the same.

For example, if the reference signal resource information is a DMRS index, and the PUSCH resource information is a time domain resource index of the PUSCH and a frequency domain resource index of the PUSCH, CG-RNTI = 1 + s_id + 14 × t_id + 14 × 80 × f_id + 14 × 80 × 8 × Antport-id, where s_id is an index number (0 ≤ s_id < 14) of the first symbol in the resource occupied by the PUSCH, t_id is an index number (0 ≤ t_id < 80) of the first slot in a system frame of the resource occupied by the PUSCH, f_id is a frequency domain resource index number (0 ≤ f_id < 8) of the resource occupied by the PUSCH, and antport_id is a DMRS sequence identifier for sending the PUSCH.

For another example, if the reference signal resource information is DMRS index, and the PUSCH resource information is a time domain resource index of the PUSCH, CG-RNTI = 1 + s_id + 14 × t_id + 14 × 80 × Antport-id, where s_id is an index number (0 ≤ s_id < 14) of the first symbol in the resource occupied by the PUSCH, t_id is an index number (0 ≤ t_id < 80) of the first slot in a system frame of the resource occupied by the PUSCH, and antport_id is a DMRS sequence identifier for sending the PUSCH.

303: The terminal side device receives the downlink control channel based on the monitoring identifier, where the downlink control channel carries information (for example, downlink control information) used to indicate a resource location of the PDSCH.

Specifically, the network side device scrambles the downlink control channel based on the monitoring identifier. Correspondingly, the terminal side device descrambles the downlink control channel based on the monitoring identifier, and learns of the resource location of the PDSCH.

It should be understood that the downlink control channel may further be used to carry information in the PUSCH resource. In this way, the terminal side device descrambles the downlink control channel based on the monitoring identifier, learns of the resource location of the PUSCH, and sends the PUSCH at the resource location of the PUSCH, where the PUSCH may carry uplink information for initial transmission or retransmission.

304: The terminal side device receives the PDSCH at the resource location of the PDSCH, where the PDSCH carries a response message.

Specifically, the response message may include feedback information. The response message may further include indication information used to indicate whether the terminal side device remains in a current state. For example, the indication information may be used to indicate that the terminal side device remains in the inactive state, or enters a connected state or an idle state. The feedback information is used to indicate whether the network side device correctly receives data (for example, the feedback information includes an ACK or a NACK).

It should be noted that, if the indication information indicates that the terminal enters the connected state, the response message may further carry a C-RNTI and an MCS-RNTI.

It should be understood that, when the uplink information includes at least one of a connection establishment request, a connection resume request, a connection re-establishment request, or uplink service data, the response message corresponding to the uplink information may include at least one of connection establishment, connection resume, a connection re-establishment response, connection suspension, downlink service data, and a random access response.

Therefore, in this embodiment of this application, the terminal side device sends the uplink information through the PUSCH; determines the monitoring identifier of the downlink control channel based on the PUSCH resource information of the resource occupied by the PUSCH; further monitors the downlink control channel based on the monitoring identifier, where the downlink control channel carries the information used to indicate the resource location of the PDSCH; and then receives the PDSCH at the resource location of the PDSCH, where the PDSCH carries the response message. In this way, the terminal side device avoids blindly monitoring, based on the monitoring identifier, a downlink control channel that does not belong to the terminal side device and parsing a corresponding response message, and power consumption of the terminal side device is reduced.

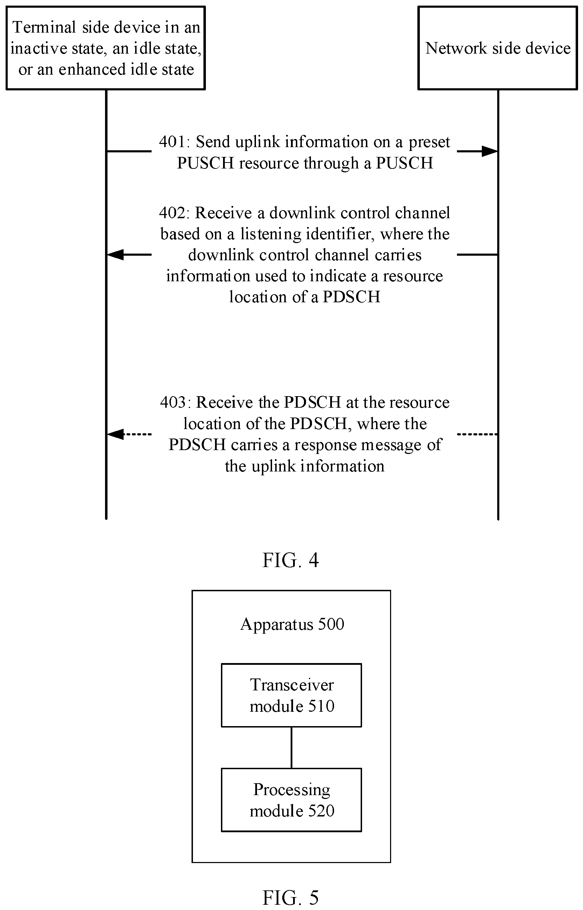

FIG. 4 is a schematic flowchart of an information processing method according to an embodiment of this application.

It should be noted that, in this embodiment of this application, unless otherwise specified, a meaning indicated by a same term is the same as that in the foregoing embodiments.

401: Afirst terminal side device sends uplink information on a preset PUSCH resource through a PUSCH, where the first terminal side device is in an inactive state, an idle state, or an enhanced idle state.

Specifically, the first terminal side device may send the uplink information by including the uplink information in the PUSCH. The first terminal side device is a terminal side device in an inactive state, an idle state, or an enhanced idle state.

It should be noted that the preset PUSCH resource may be agreed on in a protocol, or may be preconfigured by a network side device. This is not limited in this application. For example, the network side device may configure the resource by using a broadcast message or dedicated signaling. Optionally, a resource occupied by the PUSCH may be activated or allocated by the network side device by using downlink control information. The resource occupied by the PUSCH may be periodic.

It should be understood that a plurality of terminal side devices may belong to a same cell, or may belong to different cells, or may belong to a same radio access network notification area (RAN-based notification area, RNA). This is not limited in this application.

It should be further understood that the uplink information may include at least one of a connection establishment request, a connection resume request, a connection re-establishment request, or uplink service data.

Optionally, the first terminal side device determines a monitoring identifier, where the monitoring identifier is a monitoring identifier corresponding to at least two terminal side devices, in the plurality of terminal side devices, that have sent the uplink information.

Specifically, in the plurality of terminal side devices, a part of the terminal side devices may send the uplink information, or all the terminal side devices may send the uplink information. The terminal side devices that have sent the uplink information may correspond to one monitoring identifier. If at least two in the plurality of terminal side devices have sent the uplink information, the monitoring identifiers determined by the at least two terminal side devices may be the same.

For example, a terminal A sends the uplink information by using a preconfigured resource, and the terminal A monitors a physical downlink control channel by using a monitoring identifier. A terminal B sends the uplink information by using the preconfigured resource, and the terminal B monitors the physical downlink control channel by using a monitoring identifier same as that used by the terminal A. The terminal A may be in an idle state or an inactive state. The terminal B may be in an idle state or an inactive state.

Optionally, the monitoring identifier may be different from an existing monitoring identifier in a conventional solution. For example, the monitoring identifier may be an idle-state preconfigured scheduling radio network temporary identifier (Idle configured scheduling RNTI, I-CS-RNTI) or an inactive-state preconfigured scheduling radio network temporary identifier (Inactive configured scheduling RNTI, I-CS-RNTI). A value of the I-CS-RNTI may be selected from a range of reserved RNTIs. To be specific, an RNTI value that is not used (or that is idle) in the conventional solution is used as the monitoring identifier in this embodiment of this application.

Specifically, the I-CS-RNTI may be used to monitor the physical downlink control channel.

It may be understood that, the terminal sends the uplink information at the resource location of the PUSCH after sending a random access preamble. That is, the terminal has sent the uplink information on the PUSCH resource before receiving the random access response.

Optionally, the terminal side device that sends the uplink information and a terminal side device that does not send the uplink information may respectively correspond to different monitoring identifiers, or only the terminal side device that has sent the uplink information corresponds to the monitoring identifier. This is not limited in this application. It should be noted that a specific type of the monitoring identifier of the terminal side device that has sent the uplink information may be agreed on in a protocol, or the network device may configure the monitoring identifier for the terminal side device that has sent the uplink information. This is not limited in this application.

Optionally, the monitoring identifier may further be a monitoring identifier corresponding to a combination of the terminal side device that has sent the uplink information and a current state of the terminal side device.

Specifically, the at least two terminal side devices that have sent the uplink information may further correspond to different monitoring identifiers based on states of the terminal side devices. In other words, at least one state of the terminal side device has a mapping relationship with at least one monitoring identifier. The terminal side device may determine a corresponding monitoring identifier based on the current state of the terminal side device and the mapping relationship.

For example, three in five terminal side devices have sent the uplink information, and the three terminal side devices in different current states may also correspond to different monitoring identifiers, as shown in Table 1 below.

**Table 1**

| State of a terminal side device | Monitoring identifier |
|---|---|
| Idle state | I-CS-RNTI 1 |
| Inactive state | I-CS-RNTI 2 |
| Enhanced idle state | I-CS-RNTI 3 |

Optionally, mapping relationships between the terminal side devices in different states and the monitoring identifiers may be agreed on in the protocol, or may be configured by the network side device. This is not limited in this application.

For example, the network side device may configure the mapping relationship by using a broadcast message or a dedicated message.

402: The first terminal side device receives a downlink control channel based on the monitoring identifier, where the downlink control channel carries information used to indicate a resource location of a PDSCH.

Specifically, after sending the uplink information on the preset PUSCH resource through the PUSCH, the first terminal side device in the inactive state or the first terminal side device in the idle state may monitor the downlink control channel by using the monitoring identifier, where the downlink control channel carries the information used to indicate the resource location of the PDSCH. Then, the first terminal side device receives the PDSCH at the resource location of the PDSCH, where the PDSCH carries a response message. In other words, in this embodiment of this application, in a scenario in which the terminal device is in the inactive state or in the idle state, the terminal device can send the uplink information on the preset PUSCH resource. Compared with sending the uplink information by requesting an uplink grant, power consumption of the terminal side device is reduced.

Further, the terminal side device (for example, the first terminal side device) that has sent the uplink information may receive the downlink control channel based on the monitoring identifier corresponding to at least two terminal side devices, in the plurality of terminal side devices, that have sent the uplink information. In other words, the terminal side device that has not sent the uplink information does not need to monitor the downlink control channel based on the monitoring identifier. In this way, power consumption, caused by that the terminal side device still monitors the downlink control channel based on the monitoring identifier when the terminal side device has not sent the uplink information, is reduced.

It should be noted that, if the at least two terminal side devices both have sent the uplink information, and the at least two terminal side devices are in a same current state, the downlink control channels sent by the network side device to all of the at least two terminal side devices need to be scrambled by using only one monitoring identifier.

It should be understood that the downlink control channel may further be used to carry information in the PUSCH resource. In this way, the terminal side device descrambles the downlink control channel based on the monitoring identifier, learns of the resource location of the PUSCH, and sends the PUSCH at the resource location of the PUSCH, where the PUSCH may carry uplink information for initial transmission or retransmission.

403: The first terminal side device receives the PDSCH at the resource location of the PDSCH, where the PDSCH carries a response message.

Specifically, the PDSCH is received at the resource location of the PDSCH, where the PDSCH carries the response message.

Optionally, the first terminal side device starts a timer at a moment of sending the uplink information, and receives the downlink control channel based on the monitoring identifier in preset duration of the timer.

Specifically, the first terminal side device may set the timer, and the preset duration may be set for the timer. To be specific, when the timer counts to the preset duration, it indicates that the timer expires. Before the timer expires, the first terminal side device may receive the downlink control channel based on the monitoring identifier. In this way, it is avoided that the first terminal side device keeps monitoring an expired downlink control channel, and power consumption of the terminal side device is further reduced.

It should be understood that, when the uplink information includes at least one of a connection establishment request, a connection resume request, a connection re-establishment request, or uplink service data, the response message corresponding to the uplink information may include at least one of connection establishment, connection resume, a connection re-establishment response, connection suspension, downlink service data, and a random access response.

Therefore, according to the information processing method in this embodiment of this application, after sending the uplink information on the preset PUSCH resource through the PUSCH, the first terminal side device in the inactive state, the idle state, or the enhanced idle state can monitor the downlink control channel by using the monitoring identifier, where the downlink control channel carries the information used to indicate the resource location of the PDSCH. Then, the first terminal side device receives the PDSCH at the resource location of the PDSCH, where the PDSCH carries the response message. In other words, in this embodiment of this application, in a scenario in which the terminal device is in the inactive state or in the idle state, the terminal device can send the uplink information on the preset PUSCH resource. Compared with sending the uplink information by requesting an uplink grant, power consumption of the terminal side device is reduced.

It should be understood that the specific examples in the embodiments of this application are merely used to help a person skilled in the art to better understand the embodiments of this application, but are not used to limit the scope of the embodiments of this application.

It should be understood that sequence numbers of the foregoing processes do not mean execution sequences in the embodiments of this application. The execution sequences of the processes should be determined based on functions and internal logic of the processes, and should not be construed as any limitation on the implementation processes of the embodiments of this application.

The information processing methods according to the embodiments of this application are described in detail above, and information processing apparatuses in the embodiments of this application are described below.

FIG. 5 is a schematic block diagram of an information processing apparatus 500 according to an embodiment of this application.

It should be understood that the apparatus 500 may correspond to the terminal side device in the embodiment shown in FIG. 3, and may have any function of the terminal side device in the method. The apparatus 500 includes a processing module 510. Alternatively, the apparatus 500 includes a transceiver module 510 and a processing module 520.

The transceiver module 510 is configured to send uplink information through a physical uplink shared channel PUSCH.

The processing module 520 is configured to determine a monitoring identifier of a downlink control channel based on physical uplink shared channel PUSCH resource information, where the PUSCH resource information is used to indicate a resource occupied by the PUSCH.

The processing module 520 is further configured to control the transceiver module 510 to receive the downlink control channel based on the monitoring identifier, where the downlink control channel carries information used to indicate a resource location of a downlink shared channel PDSCH, and the PDSCH is used to carry a response message of the uplink information.

Optionally, the transceiver module 510 is further configured to send a preamble through a random access channel RACH.

The processing module 520 is specifically configured to:
determine the monitoring identifier based on the PUSCH resource information and random access channel RACH resource information, where the RACH resource information is used to indicate a resource occupied by the RACH.

Optionally, the transceiver module is further configured to send a reference signal.

The transceiver module is specifically configured to:
determine the monitoring identifier based on the PUSCH resource information and reference signal resource information, where the reference signal resource information is used to indicate a resource occupied by the reference signal.

Optionally, the monitoring identifier is a monitoring identifier corresponding to the PUSCH resource information.

Optionally, the monitoring identifier is a monitoring identifier corresponding to a combination of the PUSCH resource information and the RACH resource information.

Optionally, the monitoring identifier is a monitoring identifier corresponding to a combination of the PUSCH resource information and the reference signal resource information.

Optionally, the RACH resource information includes at least one of a preamble sequence code resource, a time-frequency resource identifier of the RACH, a time domain resource identifier of the RACH, or a frequency domain resource identifier of the RACH.

Optionally, the reference signal resource information includes at least one of a port resource identifier of the reference signal, a time-frequency resource identifier of the reference signal, a time domain resource identifier of the reference signal, or a frequency domain resource identifier of the reference signal.

Optionally, the PUSCH resource information includes at least one of a group identifier of a resource group to which the PUSCH belongs, a time domain resource identifier of the PUSCH, a frequency domain resource identifier of the PUSCH, or a time-frequency resource identifier of the PUSCH.

Therefore, the terminal side device sends the uplink information through the PUSCH; determines the monitoring identifier of the downlink control channel based on the PUSCH resource information of the resource occupied by the PUSCH; further monitors the downlink control channel based on the monitoring identifier, where the downlink control channel carries the information used to indicate the resource location of the PDSCH; and then receives the PDSCH at the resource location of the PDSCH, where the PDSCH carries the response message. In this way, the terminal side device avoids blindly monitoring, based on the monitoring identifier, a downlink control channel that does not belong to the terminal side device and parsing a corresponding response message, and power consumption of the terminal side device is reduced.

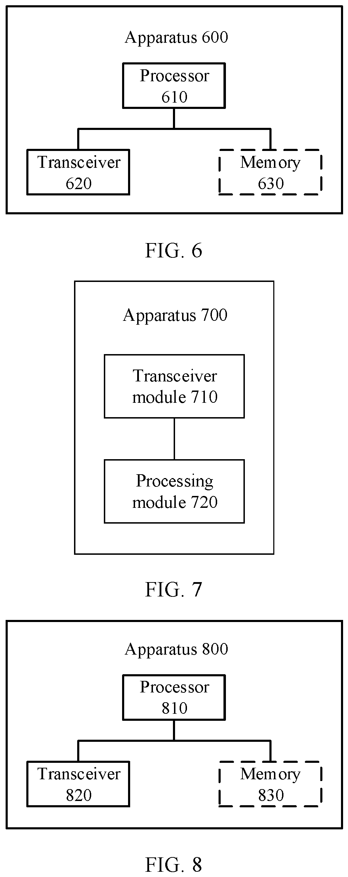

FIG. 6 is a schematic block diagram of a signal processing apparatus 600 according to an embodiment of this application. The apparatus 600 may be the terminal side device in FIG. 1 and an execution body of FIG. 4. The apparatus may use a hardware architecture shown in FIG. 6. The apparatus may include a processor 610 and a transceiver 620. Optionally, the apparatus may further include a memory 630. The processor 610, the transceiver 620, and the memory 630 communicate with each other through an internal connection path. A related function implemented by the processing module 510 in FIG. 5 may be implemented by the processor 610, and a related function implemented by the transceiver module 160 may be implemented by the processor 610 by controlling the transceiver 620.

Optionally, the processor 610 may be a general-purpose central processing unit (central processing unit, CPU), a microprocessor, an application-specific integrated circuit (application-specific integrated circuit, ASIC), a dedicated processor, or one or more integrated circuits configured to perform the technical solutions in the embodiments of this application. Alternatively, the processor may be one or more devices, circuits, and/or processing cores for processing data (for example, a computer program instruction). For example, the processor may be a baseband processor or a central processing unit. The baseband processor may be configured to process a communication protocol and communication data. The central processing unit may be configured to control a communications apparatus (for example, a base station, a terminal side device, or a chip), execute a software program, and process data of the software program.

Optionally, the processor 610 may include one or more processors, for example, include one or more central processing units (central processing unit, CPU). When the processor is one CPU, the CPU may be a single-core CPU, or may be a multi-core CPU.

The transceiver 620 is configured to send and receive data and/or a signal, and receive data and/or a signal. The transceiver may include a transmitter and a receiver. The transmitter is configured to send data and/or a signal, and the receiver is configured to receive data and/or a signal.

The memory 630 includes but is not limited to a random access memory (random access memory, RAM), a read-only memory (read-only memory, ROM), an erasable programmable memory (erasable programmable read only memory, EPROM), and a compact disc read-only memory (compact disc read-only memory, CD-ROM). The memory 630 is configured to store a related instruction and data.

The memory 630 is configured to store program code and data of the terminal side device, and may be a separate component or integrated into the processor 610.

Specifically, the processor 610 is configured to control the transceiver to perform information transmission with the network side device. For details, refer to the descriptions in the foregoing method embodiments. Details are not described herein again.

It may be understood that FIG. 6 shows only a simplified design of the signal processing apparatus. During actual application, the apparatus may further include other necessary components, including but not limited to any quantity of transceivers, processors, controllers, memories, and the like, and all terminal side devices that can implement this application shall fall within the protection scope of this application.

In a possible design, the apparatus 600 may be a chip, for example, may be a communications chip that can be used in a terminal side device, and is configured to implement a related function of the processor 610 in the terminal side device. The chip may be a field programmable gate array, a dedicated integrated chip, a system chip, a central processing unit, a network processor, a digital signal processing circuit, or a microcontroller for implementing a related function, or may be a programmable controller or another integrated chip. Optionally, the chip may include one or more memories, configured to store program code. When the code is executed, the processor is enabled to implement a corresponding function.

During specific implementation, in an embodiment, the apparatus 600 may further include an output device and an input device. The output device communicates with the processor 610, and may display information in a plurality of manners. For example, the output device may be a liquid crystal display (liquid crystal display, LCD), a light emitting diode (light emitting diode, LED) display device, a cathode ray tube (cathode ray tube, CRT) display device, a projector (projector), or the like. The input device communicates with the processor 601, and may receive an input from a user in a plurality of manners. For example, the input device may be a mouse, a keyboard, a touchscreen device, a sensing device, or the like.

It may be understood that FIG. 6 shows only a simplified design of the signal processing apparatus. During actual application, the apparatus may further include other necessary components, including but not limited to any quantity of transceivers, processors, controllers, memories, and the like, and all terminal side devices that can implement this application shall fall within the protection scope of this application.

In a possible design, the apparatus 600 may be a chip, for example, may be a communications chip that can be used in a terminal side device, and is configured to implement a related function of the processor 610 in the terminal side device. The chip may be a field programmable gate array, a dedicated integrated chip, a system chip, a central processing unit, a network processor, a digital signal processing circuit, or a microcontroller for implementing a related function, or may be a programmable controller or another integrated chip. Optionally, the chip may include one or more memories, configured to store program code. When the code is executed, the processor is enabled to implement a corresponding function.

An embodiment of this application further provides an apparatus. The apparatus may be a terminal side device or may be a circuit. The apparatus may be configured to perform an action performed by the terminal side device in the foregoing method embodiments.

FIG. 7 is a schematic diagram of a signal processing apparatus 700 according to an embodiment of this application. The apparatus 700 includes a transceiver module 710 and a processing module 720.

It should be understood that the apparatus 700 may correspond to the network side device in the embodiment shown in FIG. 3, and may have any function of the network side device in the method. The apparatus 700 includes a transceiver module 710 and a processing module 720.

The transceiver module 710 is configured to receive a physical uplink shared channel PUSCH, where the PUSCH carries uplink information.

The processing module 720 is configured to determine a monitoring identifier of a downlink control channel based on physical uplink shared channel PUSCH resource information, where the PUSCH resource information is used to indicate a resource occupied by the PUSCH.

The processing module 720 is further configured to control the transceiver module to send the downlink control channel based on the monitoring identifier, where the downlink control channel carries information used to indicate a resource location of a downlink shared channel PDSCH, and the PDSCH is used to carry a response message of the uplink information.

Optionally, the transceiver module 710 is further configured to receive a random access channel RACH, where the RACH carries a preamble.

The processing module 720 is specifically configured to:
determine the monitoring identifier based on the PUSCH resource information and random access channel RACH resource information, where the RACH resource information is used to indicate a resource occupied by the RACH.

Optionally, the transceiver module 710 is further configured to receive a reference signal.

The processing module 720 is specifically configured to:
determine the monitoring identifier based on the PUSCH resource information and reference signal resource information, where the reference signal resource information is used to indicate a resource occupied by the reference signal.

Optionally, the monitoring identifier is a monitoring identifier corresponding to the PUSCH resource information.

Optionally, the monitoring identifier is a monitoring identifier corresponding to a combination of the PUSCH resource information and the RACH resource information.

Optionally, the monitoring identifier is a monitoring identifier corresponding to a combination of the PUSCH resource information and the reference signal resource information.

Optionally, the RACH resource information includes at least one of a preamble sequence code resource, a time-frequency resource identifier of the RACH, a time domain resource identifier of the RACH, or a frequency domain resource identifier of the RACH.

Optionally, the reference signal resource information includes at least one of a port resource identifier of the reference signal, a time-frequency resource identifier of the reference signal, a time domain resource identifier of the reference signal, or a frequency domain resource identifier of the reference signal.

Optionally, the PUSCH resource information includes at least one of a group identifier of a resource group to which the PUSCH belongs, a time domain resource identifier of the PUSCH, a frequency domain resource identifier of the PUSCH, or a time-frequency resource identifier of the PUSCH.

FIG. 8 is a signal processing apparatus 800 according to an embodiment of this application. The apparatus 800 may be the network side device in FIG. 1 and FIG. 3. The apparatus may use a hardware architecture shown in FIG. 8. The apparatus may include a processor 810 and a transceiver 820. Optionally, the apparatus may further include a memory 830. The processor 810, the transceiver 820, and the memory 830 communicate with each other through an internal connection path. A related function implemented by the processing module 720 in FIG. 7 may be implemented by the processor 810, and a related function implemented by the transceiver module 710 may be implemented by the processor 810 by controlling the transceiver 820.

Optionally, the processor 810 may be a general-purpose central processing unit (central processing unit, CPU), a microprocessor, an application-specific integrated circuit (application-specific integrated circuit, ASIC), a dedicated processor, or one or more integrated circuits configured to perform the technical solutions in the embodiments of this application. Alternatively, the processor may be one or more devices, circuits, and/or processing cores for processing data (for example, a computer program instruction). For example, the processor may be a baseband processor or a central processing unit. The baseband processor may be configured to process a communication protocol and communication data. The central processing unit may be configured to control a communications apparatus (for example, a base station, a network side device, or a chip), execute a software program, and process data of the software program.

Optionally, the processor 810 may include one or more processors, for example, include one or more central processing units (central processing unit, CPU). When the processor is one CPU, the CPU may be a single-core CPU, or may be a multi-core CPU.

The transceiver 820 is configured to send and receive data and/or a signal, and receive data and/or a signal. The transceiver may include a transmitter and a receiver. The transmitter is configured to send data and/or a signal, and the receiver is configured to receive data and/or a signal.

The memory 830 includes but is not limited to a random access memory (random access memory, RAM), a read-only memory (read-only memory, ROM), an erasable programmable memory (erasable programmable read only memory, EPROM), and a compact disc read-only memory (compact disc read-only memory, CD-ROM). The memory 830 is configured to store a related instruction and data.

The memory 830 is configured to store program code and data of the network side device, and may be a separate component or integrated into the processor 810.

Specifically, the processor 810 is configured to control the transceiver to perform information transmission with the network side device. For details, refer to the descriptions in the foregoing method embodiments. Details are not described herein again.

During specific implementation, in an embodiment, the apparatus 800 may further include an output device and an input device. The output device communicates with the processor 810, and may display information in a plurality of manners. For example, the output device may be a liquid crystal display (liquid crystal display, LCD), a light emitting diode (light emitting diode, LED) display device, a cathode ray tube (cathode ray tube, CRT) display device, a projector (projector), or the like. The input device communicates with the processor 601, and may receive an input from a user in a plurality of manners. For example, the input device may be a mouse, a keyboard, a touchscreen device, a sensing device, or the like.

It may be understood that FIG. 8 shows only a simplified design of the signal processing apparatus. During actual application, the apparatus may further include other necessary components, including but not limited to any quantity of transceivers, processors, controllers, memories, and the like, and all network side devices that can implement this application shall fall within the protection scope of this application.

In a possible design, the apparatus 800 may be a chip, for example, may be a communications chip that can be used in a network side device, and is configured to implement a related function of the processor 810 in the network side device. The chip may be a field programmable gate array, a dedicated integrated chip, a system chip, a central processing unit, a network processor, a digital signal processing circuit, or a microcontroller for implementing a related function, or may be a programmable controller or another integrated chip. Optionally, the chip may include one or more memories, configured to store program code. When the code is executed, the processor is enabled to implement a corresponding function.

An embodiment of this application further provides an apparatus. The apparatus may be a network side device or may be a circuit. The apparatus may be configured to perform an action performed by the network side device in the foregoing method embodiments.

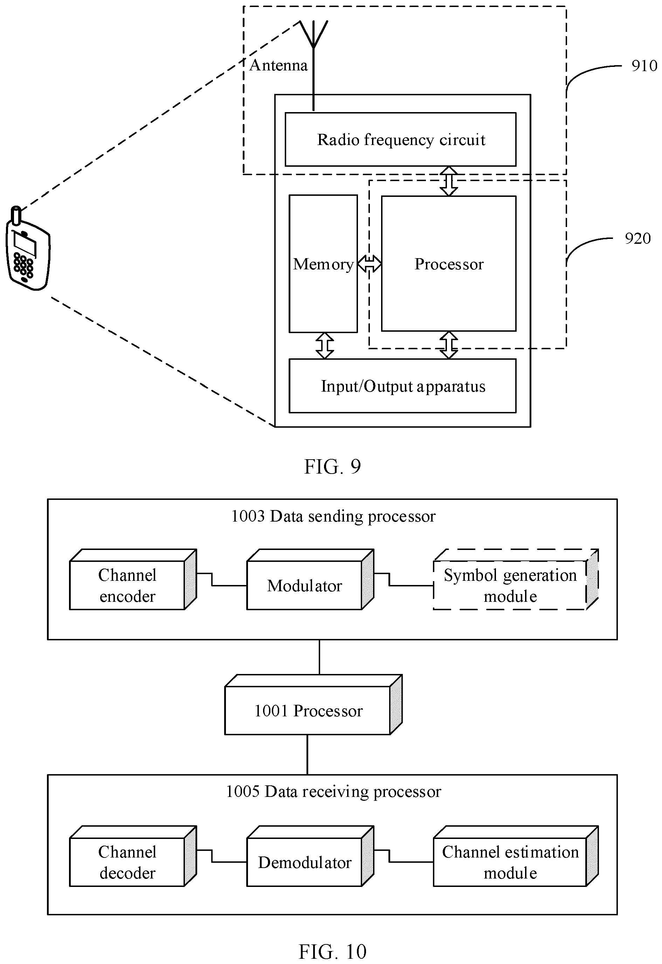

Optionally, when the apparatus in this embodiment is a terminal, FIG. 9 is a schematic structural diagram of a simplified terminal. For ease of understanding and convenience of figure illustration, an example in which the terminal is a mobile phone is used in FIG. 9. As shown in FIG. 9, the terminal includes a processor, a memory, a radio frequency circuit, an antenna, and an input/output apparatus. The processor is mainly configured to: process a communication protocol and communication data, control the terminal, execute a software program, process data of the software program, and the like. The memory is mainly configured to store the software program and the data. The radio frequency circuit is mainly configured to: perform conversion between a baseband signal and a radio frequency signal, and process the radio frequency signal. The antenna is mainly configured to send and receive the radio frequency signal in a form of an electromagnetic wave. The input/output apparatus such as a touchscreen, a display, or a keyboard is mainly configured to receive data input by a user and output data to the user. It should be noted that some types of terminals may not have the input/output apparatus.

When data needs to be sent, the processor performs baseband processing on the to-be-sent data, and outputs a baseband signal to the radio frequency circuit. After performing radio frequency processing on the baseband signal, the radio frequency circuit sends the radio frequency signal in the form of the electromagnetic wave through the antenna. When data is sent to the terminal, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 9 shows only one memory and processor. In an actual terminal product, there may be one or more processors and one or more memories. The memory may also be referred to as a storage medium, a storage device, or the like. The memory may be disposed independent of the processor, or may be integrated into the processor. This is not limited in this embodiment of this application.

In this embodiment of this application, the antenna and the radio frequency circuit that have sending and receiving functions may be considered as a transceiver unit of the terminal, and the processor that has a processing function may be considered as a processing unit of the terminal. As shown in FIG. 9, the terminal includes a transceiver unit 910 and a processing unit 920. The transceiver unit may also be referred to as a transceiver, a transceiver machine, a transceiver apparatus, or the like. The processing unit may also be referred to as a processor, a processing board, a processing module, a processing apparatus, or the like. Optionally, a component that is in the transceiver unit 910 and that is configured to implement a receiving function may be considered as a receiving unit, and a component that is in the transceiver unit 910 and that is configured to implement a sending function may be considered as a sending unit. In other words, the transceiver unit 910 includes the receiving unit and the sending unit. The transceiver unit may also be sometimes referred to as a transceiver machine, a transceiver, a transceiver circuit, or the like. The receiving unit may also be sometimes referred to as a receiver machine, a receiver, a receiver circuit, or the like. The sending unit may also be sometimes referred to as a transmitter machine, a transmitter, a transmitter circuit, or the like.

It should be understood that the transceiver unit 910 is configured to perform a sending operation and a receiving operation on a terminal side in the foregoing method embodiments, and the processing unit 920 is configured to perform an operation other than the receiving/sending operation of the terminal in the foregoing method embodiments.

For example, in an implementation, the processing unit 920 is configured to perform the operation in step 402 in FIG. 3, and/or the processing unit 920 is further configured to perform another processing step of the terminal side device in this embodiment of this application. The transceiver unit 910 is configured to perform the receiving/sending operation in step 302, 303, and 304 in FIG. 3, and/or the transceiver unit 910 is further configured to perform another receiving/sending step of the terminal side in this embodiment of this application.

In another implementation, the transceiver unit 910 may be configured to perform step 401, 403, and/or 404 in FIG. 4, and/or the transceiver unit 910 is further configured to perform another receiving/sending step of the terminal side in this embodiment of this application. The processing unit 920 is configured to perform the operation in step 402 in FIG. 4, and/or the processing unit 920 is further configured to perform another processing step of the terminal side in this embodiment of this application.

When the communications apparatus is a chip, the chip includes a transceiver unit and a processing unit. The transceiver unit may be an input/output circuit or a communications interface. The processing unit is a processor, a microprocessor, or an integrated circuit integrated on the chip.

Optionally, when the apparatus is a terminal, further refer to the device shown in FIG. 10. In an example, the device may implement a function similar to that of the processor 1010 in FIG. 10. In FIG. 10, the device includes a processor 1001, a data sending processor 1003, and a data receiving processor 1005. The processing module 1110 and the processing module 1320 in the foregoing embodiments may be the processor 1001 in FIG. 10, and complete corresponding functions. The transceiver module 510 and the processing module 520 in the foregoing embodiments may be the data sending processor 1003 and the data receiving processor 1005 in FIG. 10. Although FIG. 10 shows a channel encoder and a channel decoder, it may be understood that these modules do not constitute a limitation on this embodiment and are merely examples.

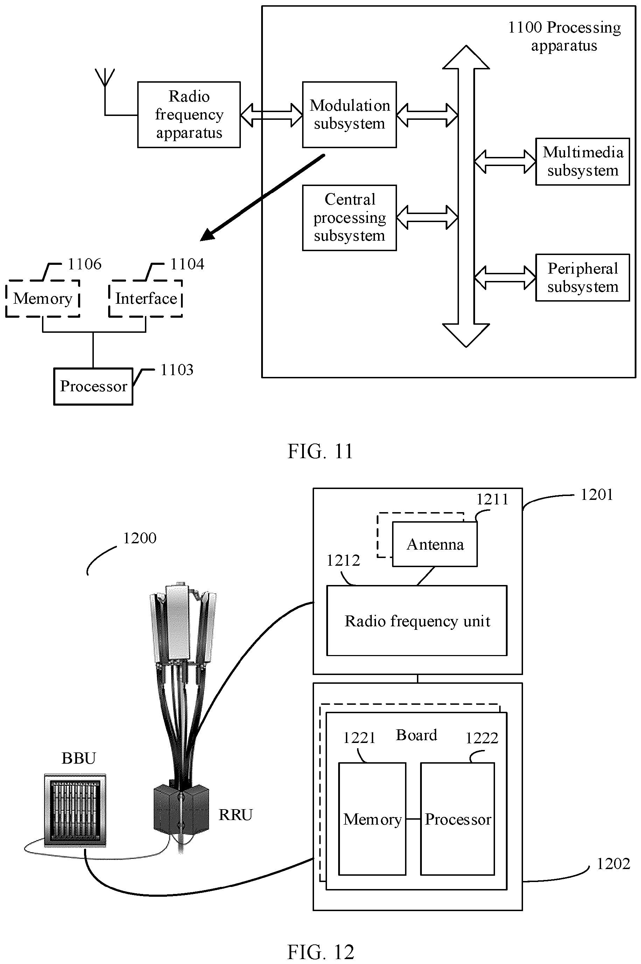

FIG. 11 shows another form of this embodiment. A processing apparatus 1100 includes modules such as a modulation subsystem, a central processing subsystem, and a peripheral subsystem. The communications device in this embodiment may be used as the modulation subsystem in the processing apparatus 1100. Specifically, the modulation subsystem may include a processor 1103 and an interface 1104. The processor 1103 completes a function of the processing module 520 and/or the transceiver module 510, and the interface 1104 completes a function of the transceiver module 1120 and/or the transceiver module 1310. In another variant, the modulation subsystem includes a memory 1106, a processor 1103, and a program that is stored in the memory and that can be run on the processor. When executing the program, the processor implements the method according to one of the first to the fifth embodiments. It should be noted that the memory 1106 may be nonvolatile or volatile. The memory 1106 may be located in the modulation subsystem, or may be located in the processing apparatus 1100, provided that the memory 1106 can be connected to the processor 1103.

Optionally, if the apparatus 700 is a network side device, the network side device may be an apparatus shown in FIG. 12. An apparatus 1200 includes one or more radio frequency units, for example, a remote radio unit (remote radio unit, RRU) 1201 and one or more baseband units (baseband unit, BBU) (which may also be referred to as digital units, digital unit, DU) 1202. The RRU 1201 may be referred to as a transceiver module, and corresponds to the transceiver module 710 in FIG. 7. Optionally, the transceiver module may also be referred to as a transceiver machine, a transceiver circuit, a transceiver, or the like, and may include at least one antenna 128 and a radio frequency unit 1212. The RRU 1201 is mainly configured to: send and receive a radio frequency signal, and perform conversion between the radio frequency signal and a baseband signal. For example, the RRU 1201 is configured to send indication information to a terminal. The BBU 1201 is mainly configured to: perform baseband processing, control a base station, and the like. The RRU 1201 and the BBU 1202 may be physically disposed together, or may be physically disposed separately, to be specific, the base station is a distributed base station.

The BBU 1202 is a control center of the base station, and may also be referred to as a processing module. The BBU 1202 may correspond to the processing module 720 in FIG. 7, and is mainly configured to implement a baseband processing function such as channel encoding, multiplexing, modulation, or spreading. For example, the BBU (processing module) may be configured to control the base station to perform an operation procedure related to the network side device in the foregoing method embodiments, for example, generate the foregoing indication information.

In an example, the BBU 1202 may include one or more boards, and a plurality of boards may jointly support a radio access network (for example, an LTE network) of a single access standard, or may separately support radio access networks (for example, an LTE network, a 5G network, or another network) of different access standards. The BBU 1202 further includes a memory 1221 and a processor 1222. The memory 1221 is configured to store a necessary instruction and necessary data. The processor 1222 is configured to control the base station to perform a necessary action, for example, is configured to control the base station to perform an operation procedure related to the network side device in the foregoing method embodiments. The memory 1221 and the processor 1222 may serve one or more boards. In other words, a memory and a processor may be independently disposed on each board. Alternatively, a plurality of boards may share a same memory and a same processor. In addition, a necessary circuit may further be disposed on each board.

In another form of this embodiment, a computer-readable storage medium is provided. The computer-readable storage medium stores an instruction. When the instruction is executed, the method in the foregoing method embodiment is performed.

In another form of this embodiment, a computer program product including an instruction is provided. When the instruction is executed, the method in the foregoing method embodiment is performed.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on the computer, all or some of the procedure or functions according to the embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid state disk, SSD)), or the like.

It should be understood that, the processor may be an integrated circuit chip, and has a signal processing capability. In an implementation process, the steps in the foregoing method embodiments may be completed by using a hardware integrated logic circuit in the processor or instructions in a form of software. The processor may be a general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or a transistor logic device, or a discrete hardware component. The processor may implement or perform the methods, steps, and logical block diagrams that are disclosed in the embodiments of this application. The general-purpose processor may be a microprocessor, or the processor may be any conventional processor or the like. The steps of the methods disclosed with reference to the embodiments of this application may be directly performed and completed by a hardware decoding processor, or may be performed and completed by a combination of hardware and software modules in a decoding processor. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in the embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. According to a description that is used as an example instead of a limitation, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchronous link DRAM, SLDRAM), and a direct rambus random access memory (direct rambus RAM, DR RAM).

It should be understood that, in this application, "when" and "if' mean that UE or a base station performs corresponding processing in an objective situation, are not intended to limit time, do not require the UE or the base station to perform a determining action during implementation, and do not mean any other limitation.

It should be further understood that in the embodiments of this application, "B corresponding to A" indicates that B is associated with A, and B may be determined based on A. However, it should be further understood that determining B based on A does not mean that B is determined based on only A. B may alternatively be determined based on A and/or other information.

In this application, "at least one" means one or more, and "a plurality of' means two or more. The term "and/or" describes an association relationship between associated objects and represents that three relationships may exist. For example, A and/or B may represent the following cases: Only A exists, both A and B exist, and only B exists, where A and B may be singular or plural. The character "/" generally represents an "or" relationship between the associated objects. "At least one item (piece) of the following" or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that "one embodiment" or "an embodiment" mentioned in the entire specification means that particular features, structures, or characteristics related to the embodiment are included in at least one embodiment of the present invention. Therefore, "in one embodiment" or "in an embodiment" appearing throughout the entire specification does not necessarily refer to a same embodiment. In addition, these particular features, structures, or characteristics may be combined in one or more embodiments in any appropriate manner. It should be understood that sequence numbers of the foregoing processes do not mean execution sequences in the embodiments of the present invention. The execution sequences of the processes should be determined based on functions and internal logic of the processes, and should not be construed as any limitation on the implementation processes of the embodiments of the present invention.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, a thread of execution, a program, and/or a computer. As shown in figures, both a computing device and an application that runs on a computing device may be components. One or more components may reside within a process and/or a thread of execution, and the components may be located on one computer and/or distributed between two or more computers. In addition, these components may be executed from various computer-readable media that store various data structures. The components may communicate by using a local and/or remote process and according to, for example, a signal having one or more data packets (for example, data from two components interacting with another component in a local system, a distributed system, and/or across a network such as the Internet interacting with other systems by using the signal).

It should be further understood that "first", "second", and various numerical symbols in this specification are merely used for distinguishing for ease of description, and are not used to limit a scope of the embodiments of this application.

It should be understood that the term "and/or" in this specification describes only an association relationship between associated objects and represents that three relationships may exist. For example, A and/or B may represent the following three cases: Only A exists, both A and B exist, and only B exists. When only A or only B exists, a quantity of A or B is not limited. In an example in which only A exists, it may be understood as that there is one or more A.

A person of ordinary skill in the art may be aware that units, algorithms, and steps in the examples described with reference to the embodiments disclosed in this application can be implemented by electronic hardware or a combination of computer software and electronic hardware. Whether the functions are performed by hardware or software depends on a particular application and a design constraint condition of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in another manner. For example, the apparatus embodiments described above are merely examples. For example, division into the units is merely logical function division and may be another division during actual implementation. For example, a plurality of units or components may be combined or integrated into another system, or some features may be ignored or not performed. In addition, the displayed or discussed mutual couplings, direct couplings, or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions in the embodiments.

In addition, functional units in the embodiments of this application may be integrated into one processing unit, or each of the units may exist alone physically, or two or more units are integrated into one unit.

When the functions are implemented in a form of a software function unit and sold or used as an independent product, the functions may be stored in a computer-readable storage medium. Based on such an understanding, the technical solutions in this application essentially, the part contributing to the current technology, or some of the technical solutions may be implemented in the form of a software product. The computer software product is stored in a storage medium and includes several instructions for instructing a computer device (which may be a personal computer, a server, a network device, or the like) to perform all or some of the steps of the methods in the embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information processing method, comprising:
sending, by a terminal side device, uplink information through a physical uplink shared channel PUSCH;
determining, by the terminal side device, a monitoring identifier of a downlink control channel based on physical uplink shared channel PUSCH resource information, wherein the PUSCH resource information is used to indicate a resource occupied by the PUSCH; and
receiving, by the terminal side device, the downlink control channel based on the monitoring identifier, wherein the downlink control channel carries information used to indicate a resource location of a downlink shared channel PDSCH, and the PDSCH is used to carry a response message of the uplink information.

2. The method according to claim 1, wherein before the sending, by a terminal side device, uplink information, the method further comprises:
sending, by the terminal side device, a preamble through a random access channel RACH, wherein
the determining, by the terminal side device, a monitoring identifier of a downlink control channel based on physical uplink shared channel PUSCH resource information comprises:
determining, by the terminal side device, the monitoring identifier based on the PUSCH resource information and random access channel RACH resource information, wherein the RACH resource information is used to indicate a resource occupied by the RACH.

3. The method according to claim 1, wherein before the sending, by a terminal side device, uplink information, the method further comprises:
sending, by the terminal side device, a reference signal, wherein
the determining, by the terminal side device, a monitoring identifier of a downlink control channel based on physical uplink shared channel PUSCH resource information comprises:
determining, by the terminal side device, the monitoring identifier based on the PUSCH resource information and reference signal resource information, wherein the reference signal resource information is used to indicate a resource occupied by the reference signal.

4. The method according to claim 1, wherein the monitoring identifier is a monitoring identifier corresponding to the PUSCH resource information.

5. The method according to claim 2, wherein the monitoring identifier is a monitoring identifier corresponding to a combination of the PUSCH resource information and the RACH resource information.

6. The method according to claim 3, wherein the monitoring identifier is a monitoring identifier corresponding to a combination of the PUSCH resource information and the reference signal resource information.

7. The method according to claim 2 or 5, wherein the RACH resource information comprises one or any combination of a preamble sequence code resource, a time-frequency resource identifier of the RACH, a time domain resource identifier of the RACH, or a frequency domain resource identifier of the RACH.

8. The method according to claim 3 or 6, wherein the reference signal resource information comprises one or any combination of a port resource identifier of the reference signal, a time-frequency resource identifier of the reference signal, a time domain resource identifier of the reference signal, or a frequency domain resource identifier of the reference signal.

9. The method according to any one of claims 1 to 8, wherein the PUSCH resource information comprises one or any combination of a group identifier of a resource group to which the PUSCH belongs, a time domain resource identifier of the PUSCH, a frequency domain resource identifier of the PUSCH, or a time-frequency resource identifier of the PUSCH.

10. An information processing method, comprising:
receiving, by a network side device, a physical uplink shared channel PUSCH, wherein the PUSCH carries uplink information;
determining, by the network side device, a monitoring identifier of a downlink control channel based on physical uplink shared channel PUSCH resource information, wherein the PUSCH resource information is used to indicate a resource occupied by the PUSCH; and
sending, by the network side device, the downlink control channel based on the monitoring identifier, wherein the downlink control channel carries information used to indicate a resource location of a downlink shared channel PDSCH, and the PDSCH is used to carry a response message of the uplink information.

11. The method according to claim 10, wherein the method further comprises:
receiving, by the network side device, a random access channel RACH, wherein the RACH carries a preamble; and
the determining, by the network side device, a monitoring identifier of a downlink control channel based on physical uplink shared channel PUSCH resource information comprises:
determining, by the network side device, the monitoring identifier based on the PUSCH resource information and random access channel RACH resource information, wherein the RACH resource information is used to indicate a resource occupied by the RACH.

12. The method according to claim 10, wherein the method further comprises:
receiving, by the network side device, a reference signal, wherein
the determining, by the network side device, a monitoring identifier of a downlink control channel based on physical uplink shared channel PUSCH resource information comprises:
determining, by the network side device, the monitoring identifier based on the PUSCH resource information and reference signal resource information, wherein the reference signal resource information is used to indicate a resource occupied by the reference signal.

13. The method according to claim 10, wherein the monitoring identifier is a monitoring identifier corresponding to the PUSCH resource information.

14. The method according to claim 11, wherein the monitoring identifier is a monitoring identifier corresponding to a combination of the PUSCH resource information and the RACH resource information.

15. The method according to claim 12, wherein the monitoring identifier is a monitoring identifier corresponding to a combination of the PUSCH resource information and the reference signal resource information.

16. The method according to claim 11 or 14, wherein the RACH resource information comprises one or any combination of a preamble sequence code resource, a time-frequency resource identifier of the RACH, a time domain resource identifier of the RACH, or a frequency domain resource identifier of the RACH.

17. The method according to claim 12 or 15, wherein the reference signal resource information comprises one or any combination of a port resource identifier of the reference signal, a time-frequency resource identifier of the reference signal, a time domain resource identifier of the reference signal, or a frequency domain resource identifier of the reference signal.

18. The method according to any one of claims 10 to 17, wherein the PUSCH resource information comprises one or any combination of a group identifier of a resource group to which the PUSCH belongs, a time domain resource identifier of the PUSCH, a frequency domain resource identifier of the PUSCH, or a time-frequency resource identifier of the PUSCH.

19. An information processing apparatus, comprising:
a transceiver module, configured to send uplink information through a physical uplink shared channel PUSCH; and
a processing module, configured to determine a monitoring identifier of a downlink control channel based on physical uplink shared channel PUSCH resource information, wherein the PUSCH resource information is used to indicate a resource occupied by the PUSCH; and
the processing module is further configured to control the transceiver module to receive the downlink control channel based on the monitoring identifier, wherein the downlink control channel carries information used to indicate a resource location of a downlink shared channel PDSCH, and the PDSCH is used to carry a response message of the uplink information.

20. The apparatus according to claim 19, wherein the transceiver module is further configured to send a preamble through a random access channel RACH; and
the processing module is specifically configured to:
determine the monitoring identifier based on the PUSCH resource information and random access channel RACH resource information, wherein the RACH resource information is used to indicate a resource occupied by the RACH.

21. The apparatus according to claim 19, wherein the transceiver module is further configured to send a reference signal; and
the transceiver module is specifically configured to:
determine the monitoring identifier based on the PUSCH resource information and reference signal resource information, wherein the reference signal resource information is used to indicate a resource occupied by the reference signal.

22. The apparatus according to claim 19, wherein the monitoring identifier is a monitoring identifier corresponding to the PUSCH resource information.

23. The apparatus according to claim 20, wherein the monitoring identifier is a monitoring identifier corresponding to a combination of the PUSCH resource information and the RACH resource information.

24. The apparatus according to claim 21, wherein the monitoring identifier is a monitoring identifier corresponding to a combination of the PUSCH resource information and the reference signal resource information.

25. The apparatus according to claim 20 or 23, wherein the RACH resource information comprises one or any combination of a preamble sequence code resource, a time-frequency resource identifier of the RACH, a time domain resource identifier of the RACH, or a frequency domain resource identifier of the RACH.

26. The apparatus according to claim 21 or 24, wherein the reference signal resource information comprises one or any combination of a port resource identifier of the reference signal, a time-frequency resource identifier of the reference signal, a time domain resource identifier of the reference signal, or a frequency domain resource identifier of the reference signal.

27. The apparatus according to any one of claims 19 to 26, wherein the PUSCH resource information comprises one or any combination of a group identifier of a resource group to which the PUSCH belongs, a time domain resource identifier of the PUSCH, a frequency domain resource identifier of the PUSCH, or a time-frequency resource identifier of the PUSCH.

28. An information processing apparatus, comprising:
a transceiver module, configured to receive a physical uplink shared channel PUSCH, wherein the PUSCH carries uplink information; and
a processing module, configured to determine a monitoring identifier of a downlink control channel based on physical uplink shared channel PUSCH resource information, wherein the PUSCH resource information is used to indicate a resource occupied by the PUSCH; and
the processing module is further configured to control the transceiver module to send the downlink control channel based on the monitoring identifier, wherein the downlink control channel carries information used to indicate a resource location of a downlink shared channel PDSCH, and the PDSCH is used to carry a response message of the uplink information.

29. The apparatus according to claim 28, wherein the transceiver module is further configured to receive a random access channel RACH, wherein the RACH carries a preamble; and
the processing module is specifically configured to:
determine the monitoring identifier based on the PUSCH resource information and random access channel RACH resource information, wherein the RACH resource information is used to indicate a resource occupied by the RACH.

30. The apparatus according to claim 28, wherein the transceiver module is further configured to receive a reference signal; and
the processing module is specifically configured to:
determine the monitoring identifier based on the PUSCH resource information and reference signal resource information, wherein the reference signal resource information is used to indicate a resource occupied by the reference signal.

31. An apparatus, comprising a processor, wherein the processor is configured to invoke a program stored in a memory, to perform the method according to any one of claims 1 to 9.

32. An apparatus, comprising a processor and an interface circuit, wherein the processor is configured to communicate with another apparatus through the interface circuit, and perform the method according to any one of claims 1 to 9.

33. An apparatus, comprising a processor, wherein the processor is configured to invoke a program stored in a memory, to perform the method according to any one of claims 10 to 18.

34. An apparatus, comprising a processor and an interface circuit, wherein the processor is configured to communicate with another apparatus through the interface circuit, and perform the method according to any one of claims 10 to 18.

35. A terminal, comprising the apparatus according to claim 31 or 32.

36. A network device, comprising the apparatus according to claim 33 or 34.

37. A computer storage medium, wherein the computer storage medium stores an instruction, and when the instruction is run, the method according to any one of claims 1 to 9 or any one of claims 10 to 18 is implemented.

38. A computer program product, wherein when the computer program product runs on a processor, the processor is enabled to perform the method according to any one of claims 1 to 9 or any one of claims 10 to 18.
